(19) Europäisches Patentamt / European Patent Office / Office européen des brevets

(11) **EP 3 697 523 B1**

(12) **EUROPÄISCHE PATENTSCHRIFT**

(45) Veröffentlichungstag und Bekanntmachung des Hinweises auf die Patenterteilung:
**02.07.2025** Patentblatt **2025/27**

(51) Internationale Patentklassifikation (IPC):
**B01D 71/06** *(2006.01)* **B01D 67/00** *(2006.01)*
**B01D 69/02** *(2006.01)* **B01D 69/10** *(2006.01)*

(21) Anmeldenummer: **18785954.1**

(22) Anmeldetag: **12.10.2018**

(52) Gemeinsame Patentklassifikation (CPC):
**B01D 67/0013; B01D 69/02; B01D 69/105;**
B01D 71/06; B01D 2323/60; B01D 2325/0233;
B01D 2325/0283

(86) Internationale Anmeldenummer:
**PCT/EP2018/077836**

(87) Internationale Veröffentlichungsnummer:
**WO 2019/076740 (25.04.2019 Gazette 2019/17)**

(54) **VERFAHREN ZUR HERSTELLUNG EINER PORÖSEN EINLAGIGEN POLYMERMEMBRAN**

METHOD FOR PRODUCING A POROUS SINGLE-LAYER POLYMER MEMBRANE

PROCÉDÉ DE FABRICATION D'UNE MEMBRANE POLYMÈRE MONOCOUCHE POREUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2017 DE 102017009784**

(43) Veröffentlichungstag der Anmeldung:
**26.08.2020** Patentblatt **2020/35**

(73) Patentinhaber: **Sartorius Stedim Biotech GmbH 37079 Göttingen (DE)**

(72) Erfinder:
• **HANSMANN, Björn**
**37079 Göttingen (DE)**
• **HOSCH, Jörg**
**37079 Göttingen (DE)**
• **SCHWELLENBACH, Jan**
**37079 Göttingen (DE)**

(74) Vertreter: **Novagraaf International SA Chemin de l'Echo 3 1213 Onex, Geneva (CH)**

(56) Entgegenhaltungen:
EP-A1- 2 604 329      EP-A2- 0 247 596
EP-A2- 3 159 057      US-A- 4 976 859
US-A1- 2008 241 503   US-A1- 2010 166 961
US-B1- 6 255 359

• XU H ET AL: "FROM PARTICLE-ASSISTED WETTING TO THIN FREE-STANDING POROUS MEMBRANES", ANGEWANDTE CHEMIE INTERNATIONAL EDITION, VERLAG CHEMIE, DE, vol. 42, no. 38, 6 October 2003 (2003-10-06), pages 4694 - 4696, XP001197448, ISSN: 1433-7851, DOI: 10.1002/ANIE.200351427

**Beschreibung**

Die vorliegende Erfindung betrifft ein Verfahren zur Herstellung einer porösen einlagigen Polymermembran.

Bei der Herstellung von Filtrationsmembranen in Phasenseparationsprozessen werden üblicherweise zunächst Gießlösungen (homogene Gemische aus verschiedenen Stoffen) in Schichten oder in Form von Formkörpern wie Hohlfasern gegossen. Dann wird die Gießlösungszusammensetzung oder der thermodynamische Zustand der Gießlösung bis zum Erreichen der Entmischung/Phasenseparation verändert. Aus der Phasenseparation geht eine integrale Phase mit einem zusammenhängenden festen Anteil hervor. Dieser Anteil wird als poröse Membran bzw. Formkörper aus dem Herstellungsverfahren erhalten. Derartige Verfahren werden in einem oder mehreren verschiedenen Verfahrensschritten durchgeführt. Dabei werden im Wesentlichen vier unterschiedliche Mechanismen zur Einleitung der Phasenseparation unterschieden:

(1) nichtlösungsmittelinduzierte Phasenseparation ("non-solvent induced phase separation", NIPS),
(2) dampfinduzierte Phasenseparation ("vapour-induced phase separation", VIPS),
(3) verdunstungsinduzierte Phasenseparation ("evaporation-induced phase separation", EIPS) und
(4) thermisch induzierte Phasenseparation ("thermally induced phase separation", TIPS),

sowie Kombinationen daraus.

Weiterhin bekannt ist die Herstellung von porösen Membranen aus mehreren Schichten von Gießlösungen, die sich in ihrer jeweiligen Zusammensetzung unterscheiden. Dieses Verfahren wird oft als *co-casting* oder Mehrfachbeschichtung bezeichnet. Im Unterschied zu Verfahren, worin lediglich eine einzige Gießlösung Einsatz findet, werden im co-casting-Verfahren mehrschichtige (mehrlagige) Membranen erhalten. Dies ist auf die Tatsache zurückzuführen, dass im *co-casting* mehrere Gießlösungsschichten simultan auf einen bewegten Träger so aufgebracht werden, dass sie mehrere membranbildende Polymerschichten bilden.

Eine Klassifizierung von Filtrationsmembranen wird nach IUPAC-Empfehlung anhand ihrer retentiven Eigenschaften und Porengrößen getroffen. So wird auf Grundlage der Porengröße generell zwischen Mikrofiltrationsmembranen (mittlere Porengröße: 0,1 bis 10 $\mu$m), Ultrafiltrationsmembranen (mittlere Porengröße: 0,01 bis weniger als 0,1 $\mu$m), Nanofiltrationsmembranen (mittlere Porengröße: 0,001 bis weniger als 0,01 $\mu$m) und Revers-Osmosemembranen (mittlere Porengröße: 0,0001 bis weniger als 0,001 $\mu$m) unterschieden (siehe Shang-Tian Yang, Bioprocessing for Value-Added Products from Renewable Resources, 2007).

In Bezug auf die retentiven Eigenschaften der Membranen kann eine ähnliche Definition auf Grundlage des *molecular weight cut-off* (MWCO) getroffen werden. Der MWCO bezieht sich auf den gelösten Stoff mit dem niedrigsten Molekulargewicht in Dalton, bei welchem ein Anteil von 90 % des gelösten Stoffs von der Membran zurückgehalten wird, oder alternativ auf das Molekulargewicht eines Moleküls in Dalton, bei welchem ein Anteil von 90 % der Moleküle mit diesem Molekulargewicht von der Membran zurückgehalten werden. Filtrationsmembranen mit einem MWCO von Testmolekülen oder Teilchen mit einem hydrodynamischen Radius von 0,1 bis 10 $\mu$m werden als Mikrofiltrationsmembranen bezeichnet. Entsprechende Zuordnungen von MWCO-Bereichen sind wie folgt: Ultrafiltrationsmembranen: 0,01 $\mu$m bis weniger als 0,1 $\mu$m; Nanofiltrationsmembranen: 0,001 $\mu$m bis weniger als 0,01 $\mu$m; und Revers-Osmosemembranen: 0,0001 $\mu$m bis weniger als 0,001 $\mu$m.

Verfahren zur Bestimmung der mittleren Porengröße

In Abhängigkeit der zu bestimmenden Porengröße kommen unterschiedliche Verfahren zum Einsatz. Im Bereich der Mikrofiltration wird vornehmlich die Kapillarfluss-Porometrie verwendet. Die Kapillarfluss-Porometrie ist eine Gas/Flüssigkeits-Porosimetrie, bei der die differentiellen Gasdrücke und Flussraten durch eine Membranprobe zuerst im feuchten und anschließend im trockenen Zustand gemessen werden.

Die Membranprobe wird vor der Messung mit benetzender Flüssigkeit so in Kontakt gebracht, dass sämtliche vorhandenen Poren mit dieser Flüssigkeit gefüllt sind. Nach dem Füllen der Poren und dem Einbringen der Probe ist die Messzelle zu verschließen und die Messung zu starten. Der Gasdruck wird nach dem Start der Messung automatisch und schrittweise erhöht und die dem anliegenden Druck entsprechenden Porendurchmesser werden durch den Gasdruck entleert. Dies erfolgt solange, bis der relevante Porenbereich erfasst wurde, das heißt bis auch die kleinsten im Messbereich vorhandenen Poren von Flüssigkeit befreit sind. Danach wird der Druck wieder abgesenkt und die Messung an der nun trockenen Probe automatisch wiederholt. Aus der Differenz beider Druck-Flussrate Kurven wird die Porengrößenverteilung über die Young-Laplace-Gleichung berechnet. (Siehe Shrestha, Aabhash, "Characterization of porous membranes via porometry" (2012), Mechanical Engineering Graduate Theses & Dissertations, Paper 38.)

Die Charakterisierung der Porengrößenverteilung bei Ultra- und Nanofiltrationsmembranen kann nicht durch eine Gas/Flüssigkeits-Porosimetrie vorgenommen werden, da die Poren in diesen Membranen einen deutlich kleineren Durchmesser besitzen. Nach der Laplace-Gleichung steigt der benötigte Druck zur Verdrängung der benetzenden Flüssigkeit bei gegebener Oberflächenspannung auf Größenordnungen bis zu 50 bis 70 bar. Solche Drücke erschweren einerseits die Handhabung und werden teilweise limitiert durch die apparativen Randbedingungen, andererseits ist bei den auf die Membran ausgeübten Drücken und somit resultierenden Kräften eine Veränderung der Struktur zu erwarten und im Extremfall ein Verlust der strukturellen Integrität. Die hier gewonnen physikalischen Eigenschaften bezüglich der Porengrößenverteilung würden nicht denen einer intakten Membran entsprechen. Um eine Charakterisierung dennoch durchführen zu können, wird ein Absenken der Oberflächen- bzw. Grenzflächenspannung der benetzenden und verdrängenden Medien angestrebt. Aus diesem Grund verwendet man eine Flüssig-Flüssig-Verdrängung zweier nicht mischbarer Flüssigkeiten. Die Grenzflächenspannung zwischen diesen beiden Medien ist deutlich geringer als die Oberflächenspannung zwischen einem Gas und einer Flüssigkeit. Zur Verdrängung einer Flüssigkeit durch eine andere gilt analog zur Gas/Flüssigkeits-Porosimetrie die Laplace-Beziehung und es kann ein ähnliches Messverfahren eingesetzt werden, mit dem Unterschied, dass nicht Gasflussraten sondern Flussraten der verdrängenden Flüssigkeit in Abhängigkeit der differentiellen Druckerhöhung aufgenommen werden. (Siehe R. Dávila, Characterization of Ultra and Nanofiltration commercial Filters by Liquid-Liquid Displacement Porosimetry, 2013.)

Verfahren zur Bestimmung des MWCO

Die Ermittlung des MWCO verschiedener Membranen geschieht über die Aufnahme von Siebkurven. Dabei werden Proben eines Polymers (Dextran, Polystyrol, Pullulan, etc.) mit breiter Größenverteilung über die jeweilige Membran filtriert. Im Anschluss wird sowohl die Feedlösung als auch das Filtrat mittels Größenausschlusschromatographie charakterisiert. Über die Abreicherung bestimmter Polymergrößen im Filtrat kann auf die retentiven Eigenschaften der Membran geschlossen und eine Siebkurve errechnet werden. Das Polymergewicht, bei dem ein 90%-iger Rückhalt erreicht wird, wird als MWCO bezeichnet. (Siehe C. Loh, Effects of Additives and Coagulant Temperature on Fabrication of High Performance PVDF/Pluronic F127 Blend Hollow Fiber Membranes via Nonsolvent Induced Phase Separation, Chinese Journal of Chemical Engineering, 20 (1) 71-79 (2012)).

Erfindungsgemäß können die mittlere Porengröße und der MWCO, wie vorstehend unter "Verfahren zur Bestimmung der mittleren Porengröße" und "Verfahren zur Bestimmung des MWCO" beschrieben, bestimmt werden.

Neben den vorstehenden Parametern lassen sich Filtrationsmembranen zudem hinsichtlich ihrer Porengrößenverteilung über den Membranquerschnitt klassifizieren. Dabei werden Filtrationsmembranen mit einer (weitgehend) einheitlichen Porengröße entlang des Membranquerschnitts als symmetrisch bezeichnet, wohingegen Membranen mit ausgeprägten Porengrößengradienten entlang des Membranquerschnitts als asymmetrisch bezeichnet werden.

Im Zuge dieser Beschreibung kann ein Asymmetriefaktor definiert werden. Dieser beschreibt das Verhältnis aus größter und kleinster Porengröße innerhalb des Membranquerschnittes. Ab einem Faktor von 1,5 kann von einer asymmetrischen Membran gesprochen werden. Sofern der Asymmetriefaktor kleiner als 1,5 ist, liegt eine symmetrische Membran vor.

Je nach angestrebter Membraneigenschaft werden unterschiedliche Herstellungsverfahren eingesetzt. Symmetrische Mikrofiltrationsmembranen (beispielsweise aus Celluloseacetat (CA), Cellulosenitrat (CN) oder Polyvinylidenfluorid (PVDF)) werden hauptsächlich über EIPS-Verfahren hergestellt. Diese einstufigen Verfahren erlauben nur eine eingeschränkte Kontrolle der Stofftransportprozesse und der damit verbundenen Membranbildungsprozesse. Auf diese Weise können keine Porengrößengradienten innerhalb der Membran erzeugt werden, was asymmetrische Mikro- und Ultrafiltrationsmembranen unzugänglich macht.

Asymmetrische und symmetrische Nanofiltrationsmembranen (zum Beispiel aus CA oder Polyethersulfon (PESU)) hingegen können über NIPS-Verfahren hergestellt werden. Diese einstufigen Verfahren sind allerdings nicht in der Lage, asymmetrische Mikro- und Ultrafiltrationsmembranen herzustellen.

Asymmetrische Mikrofiltrationsmembran aus Polysulfon (PSU) bzw. Polyethersulfon (PES) können über VIPS-Verfahren hergestellt werden. Ein Zugang zu asymmetrischen Ultrafiltrationsmembranen wird nach dem Stand der Technik nur durch eine Kombination von VIPS- und NIPS-Verfahren in zweistufigen Verfahren realisiert. Da diese zweistufigen Verfahren viele Parameter beinhalten, die kontrolliert werden müssen, besteht Bedarf für ein vereinfachtes Verfahren zur Herstellung asymmetrischer Ultrafiltrationsmembranen.

Vorstehende Verfahren zur Herstellung asymmetrischer Membranen schließen eine NIPS-Verfahrensstufe ein (nichtlösungsmittelinduzierte Phasenseparation). Bei Phaseninversionsprozessen, die durch Nichtlösungsmittel induziert werden, weisen die Oberflächen der Ober- und Unterseite der sich bildenden Membran an der Phasengrenze Gießlösung/Fällmittel (Luftseite) und Gießlösung/Unterlage (Bandbeziehungsweise Trägerseite) eine wesentlich geringere Porosität als im Membraninneren auf. Dieser Umstand ist im Wesentlichen auf zwei Mechanismen zurückzuführen:

- Durch Eintrag von Nichtlösungsmittel und den Entzug von Lösungsmittel aus dem Gießlösungsfilm in einem NIPS-Verfahren an der Phasengrenzfläche Gießlösung/Fällmittel wird eine Gelbildung des verwendeten membranbildenden Polymers hervorgerufen, was zur Ausbildung einer dichten Polymerschicht mit niedriger Porosität führt (siehe F. Altena, Phase separation phenomena in cellulose acetate solutions in relation to asymmetric membrane formation, Dissertation, 1982).

Die sich ausbildende Gelschicht wirkt als diffusive Barriere für das weitere Eindringen von Fällmittel. Dadurch nimmt der Stoffaustausch von Fäll- und Lösungsmittel und somit die Membranbildungsgeschwindigkeit direkt unter der Phasengrenze Gießlösung/Fällmittel ab. Auf diese Weise wird eine Gelbildung im Inneren der Membran verhindert und es kommt vornehmlich zur Phasenseparation und damit zur Ausbildung zellularer, schwammartiger oder fingerartiger Unterstrukturen mit höherer Porosität als in der Gelschicht.

Dieser Mechanismus kann vorteilhaft bei der Herstellung stark asymmetrischer Nanofiltrationsmembranen sein, verhindert aber die Herstellung offenporiger symmetrischer und asymmetrischer Mikrofiltrations- oder Ultrafiltrationsmembranen (d. h. von Mikrofiltrations- oder Ultrafiltrationsmembranen mit hoher Oberflächenporosität) in einem NIPS-Einschrittverfahren.

- Weiterhin neigen die während einer Phasenseparation entstehenden naszierenden Strukturen der Membran an Grenzflächen (Gießlösung/Fällmittel und Gießlösung/Träger), unter der Voraussetzung, dass keine Gelbildung auftritt, im weiteren Bildungsprozess zur Koaleszenz, um die Grenzflächenspannung zwischen polymerreicher, polymerarmer und der angrenzenden Phase (Atmosphäre oder Unterlage (Träger)) zu reduzieren. Dies führt zu einer signifikanten Reduktion der Oberflächenporosität an Träger- und Luftseite. Die resultierenden Membranen weisen eine Oberflächenporosität auf, welche deutlich niedriger als die Gesamtporosität der Membran ist (siehe A. Deratani et al., Retainment of pore connectivity in membranes prepared with vapor-induced phase separation, Journal of Membrane Science 362 (2010), Seiten 360-373).

Die Porositäten an der Luftseite und Bandseite der Membran betragen für kommerzielle Mikrofiltrationsmembranen typischerweise 15 - 40%. Die Gesamtporosität derartiger Membranen beträgt typischerweise mehr als 70%. Diese Porositätsdifferenz ist insbesondere daher nachteilig, da sie zu einer schnelleren Verblockung der angeströmten Membranseite und einer daraus resultierenden Permeabilitätsreduktion während eines Filtrationsschrittes führt.

Als Gesamtporosität wird dabei der Porositätsmittelwert über den gesamten Membranquerschnitt verstanden. Dieser lässt sich aus geometrischen und gravimetrischen Daten einer Membranprobe einfach berechnen:

$$\varepsilon_p = \frac{d_{Mem} \cdot A_{Mem}}{\frac{m_{Mem}}{\rho_{Poly}}}$$

Dabei steht $d_{Mem}$ für die Dicke der Membranprobe, $A_{Mem}$ für die Membranfläche, $m_{Mem}$ für die Masse der Membranprobe und $\rho_{Poly}$ für die Dichte des membranbildenden Polymers.

Ein Nachteil von durch *co-casting* erhaltenen mehrschichtigen Membranen besteht in der meist abrupten Änderung der Porengrößen zwischen den Schichten. Bei der abrupten Verringerung der Porengröße beim Übergang von einer Schicht in eine andere kommt es zu Leistungsverlusten: Ein breiter Bereich an Teilchengrößen wird an der Grenzfläche der durch *co-casting* erzeugten Schichten zurückgehalten.

Diese Teilchenbeladung an der Schichtgrenze führt zu einem Verlust an Filterstandzeit.

Häufig wird *co-casting* verwendet, um eine Vergrößerung der Poren an der Oberfläche der erhaltenen Membran zu erzielen und die Flussleistung gegenüber Membranen mit dichten Hautschichten zu erhöhen. Allerdings geht die Vergrößerung der Poren bei der Verwendung des co-casting-Verfahrens mit einer nachteiligen Erhöhung der Gesamtdicke einher. Dicke Schichten aus mehreren Lagen, wie sie im co-casting-Verfahren erhalten werden, können weniger dicht gepackt werden als einlagige Membranen. Die Gesamtdicke der Membran bestimmt beispielsweise beim Plissieren von Filterelementen die maximale Fläche, die in eine vorgegebene Geometrie eines Filterelements in Form einer Plissierung eingepasst werden kann. Daher sollte die Dicke möglichst gering gehalten werden. Außerdem besteht bei co-cast-Membranen das Risiko der Delaminierung/Lagentrennung während der Plissierung, was bei einlagigen Membranen nicht der Fall ist.

In diesem Zusammenhang muss erwähnt werden, dass eine Vergrößerung der Poren durch *co-casting* nicht mit einer Erhöhung der Oberflächenporosität einhergeht. Selbst wenn durch *co-casting* innere, vom Bulk-Material der Membran eingeschlossene Membranoberflächen mit größeren Poren zugänglich sind, kann die Oberflächenporosität dadurch nicht erhöht werden.

WO 00/13768 A1 offenbart ein Verfahren zur Herstellung einer mikroporösen Glasmembran, bei welchem auf ein anorganisches poröses Unterstützungselement eine Beschichtung aus einer Suspension mit Glaspartikeln aufgebracht wird, die unter Erhitzen in eine kontinuierliche Glasphase überführt werden. Das poröse Unterstützungselement wird nachfolgend durch Behandlung mit Säure wenigstens teilweise wieder entfernt. Poröse Polymermembranen bzw. Herstellungsverfahren dafür werden nicht beschrieben.

JP 2011-101837 A, Beispiel 1, beschreibt die Herstellung einer Membran zum Trennen von Öl und Wasser, worin zunächst ein selbsttragender Bogen aus Polyethylenterephthalat (PET) mit einer PVA-Lösung beschichtet, erhitzt und getrocknet wird. Der getrocknete Bogen wird nachfolgend mit einer Celluloseacetat-Gießlösung beschichtet, erhitzt und nochmals getrocknet. Anschließend wird die resultierende PET-PVA-Celluloseacetat-Kompositstruktur durch Hitzeeinwirkung mit einem Gewebe als Unterstützung verbunden und die Surrogatschicht aus Polyvinylalkohol durch Behandeln mit Wasser entfernt.

DE 103 26 741 A1 offenbart eine asymmetrische Cellulosemembran mit einer porösen oberen Schicht, einer porösen unteren Schicht und einer dazwischen befindlichen mittleren Schicht mit zwei isotropen Regionen. Die erste isotrope Region, welche der oberen Schicht benachbart ist, hat kleinere Poren als die obere Schicht, aber größere Poren als die zweite isotrope Region, die der unteren Schicht benachbart ist. Die Poren der zweiten isotropen Region sind kleiner als die Poren der unteren Schicht.

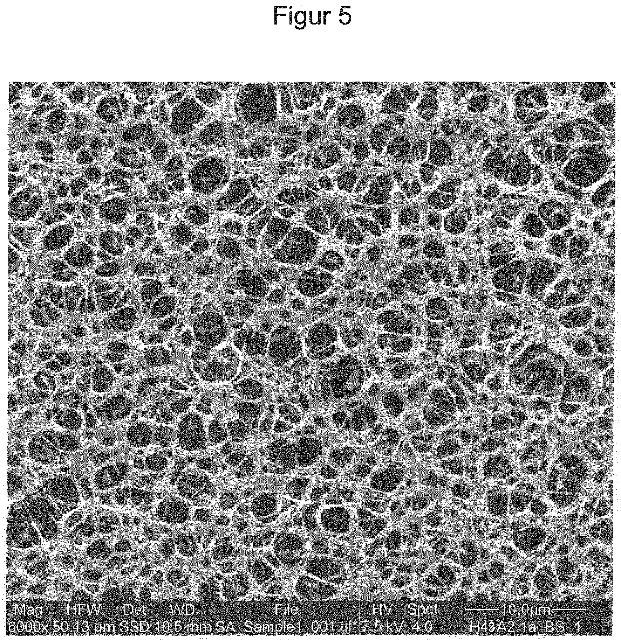

EP 2 134 455 B1 offenbart ein Verfahren zur Herstellung von mikroporösen asymmetrischen (vgl. Absatz [0061]) Polymermembranen, bei welchem eine Gießlösung, welche ein membranbildendes Polymer (z. B. Celluloseacetat, vgl. Absatz [0026]) enthält, simultan mit einer Koagulanslösung, welche ein Nichtlösungsmittel für das membranbildende Polymer (z. B. Wasser oder Aceton, vgl. Absatz [0036]) und ein Beschichtungshilfsmittel (z. B. Polyethylenglykol oder Polyether) enthält, auf einen bewegten Träger gegossen wird, wobei ein Teil der Koagulanslösung (vgl. Absätze [0032] bis [0034] und [0038] sowie Anspruch 8) durch die Grenzfläche zwischen den beiden Schichten in die Gießlösung diffundiert und eine Phaseninversion unter Membranbildung auslöst (Absatz [0052] und Figur 5). Bei dem Verfahren wird keine finale Behandlung des mehrschichtigen Verbunds mit einem Fällbad durchgeführt (vgl. Absätze [0009] und [0045]).

EP 1 509 314 B1 offenbart ein Verfahren zur Herstellung von mikroporösen asymmetrischen Polymermembranen, deren dichte Hautschicht durch Auflösung der obersten Polymerschicht der Membran offenporiger gemacht wird (vgl. Absätze [0009], [0010], [0012], [0015], [0017], [0024] und [0025]), enthält jedoch keine Angaben dazu, wie die konkreten Ausführungsbeispiele erhalten wurden.

US 2015/0258499 A1 offenbart eine asymmetrische Ultrafiltrationsmembran mit einer Hautschicht, welche zur Entfernung von Viren aus Proteinlösungen verwendet wird. Die Membran ist ein Verbund aus einer ersten Mikro- oder Ultrafilterschicht und einer zweiten Ultrafilterschicht, wobei der Verbund durch das im Wesentlichen gleichzeitige Aufgießen (co-casting) von zwei oder mehreren Polymergießlösungen auf einen bewegten Träger hergestellt wird. Die beiden Filterschichten unterscheiden sich im Teilchenrückhaltevermögen.

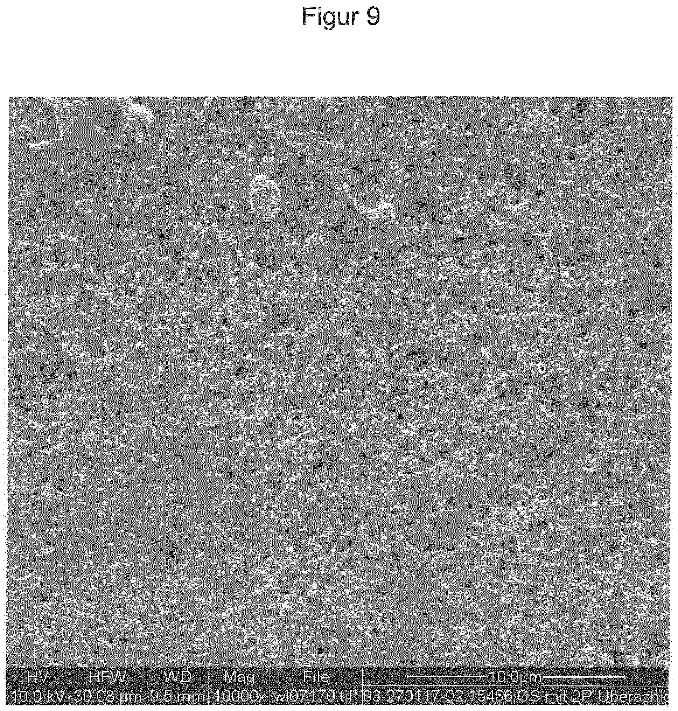

EP 1 307 280 B1 offenbart ein co-casting-Herstellungsverfahren für mehrschichtige Membranen, welche durch Aufbringen von mehreren Gießlösungsschichten mit jeweils einem membranbildenden Polymer auf einen bewegten Träger hergestellt werden. Nach Phaseninversion resultiert eine Membran, deren einzelne Schichten jeweils eine unterschiedliche Porengröße aufweisen, wobei sich die Porengröße an der Grenzfläche benachbarter Schichten - gekennzeichnet durch eine "Demarkationslinie" - sprunghaft ändert. Als Vergleichsbeispiele sind auch Membranen offenbart, die nur aus einer einzigen Gießlösungsschicht hergestellt werden, wobei die Struktur dieser Membranen nicht charakterisiert wird (vgl. Abs. [0072] und [0088] i. V. m. Figur 9).

EP 2 604 329 A1 beschreibt eine Membran mit lokalisierten Asymmetrien und ein Verfahren zu deren Herstellung.

Der vorliegenden Erfindung liegt somit die Aufgabe zu Grunde, ein Verfahren zur Herstellung einer einlagigen Polymermembran mit hoher Oberflächenporosität und geringem Unterschied zwischen Oberflächen- und Gesamtporosität bereitzustellen.

Diese Aufgabe wird durch die in den Ansprüchen gekennzeichneten Ausführungsformen gelöst.

Insbesondere betrifft die vorliegende Erfindung ein Verfahren zur Herstellung einer porösen einlagigen Polymermembran, welches die folgenden Schritte umfasst:

(A) Bereitstellen einer membranbildenden Gießlösung, welche ein membranbildendes Polymer und ein Lösungsmittel dafür umfasst;
(B) Bereitstellen einer nicht membranbildenden und nicht fällenden Schutzlösung;
(C) Bereitstellen eines Trägers;
(D) Aufbringen von zumindest der Gießlösung und der Schutzlösung auf den Träger unter Bildung eines Films, umfassend eine Gießlösungsschicht und eine daran angrenzende Schutzlösungsschicht;
(E) Inkontaktbringen des Films mit einem Fällmittel; und
(F) Entfernen der Schutzlösungsschicht,

wobei in Schritt (D) der Film dadurch gebildet wird, dass

die Gießlösung auf den Träger aufgebracht wird, wodurch sich die Gießlösungsschicht bildet, und die Schutzlösung auf die Gießlösungsschicht aufgebracht wird, wodurch sich die Schutzlösungsschicht bildet

oder

die Schutzlösung auf den Träger aufgebracht wird, wodurch sich die Schutzlösungsschicht bildet, und die Gießlösung auf die Schutzlösungsschicht aufgebracht wird, wodurch sich die Gießlösungsschicht bildet und anschließend eine weitere Schutzlösung auf die Gießlösungsschicht aufgebracht wird, wodurch sich eine weitere Schutzlösungsschicht ausbildet,

und

wobei die Schutzlösung 2-Pyrrolidon umfasst oder ein nicht zur Membranbildung fähiges Polymer (Surrogatpolymer), ausgewählt aus der Gruppe, bestehend aus Polyvinylpyrrolidon, Polyethylenglykol, Polysacchariden und/oder Polyvinylalkohol, und ein Lösungsmittel dafür umfasst.

Aus dem erfindungsgemäßen Verfahren ist eine poröse einlagige Polymermembran erhältlich. Diese unterscheidet sich dadurch von Polymermembranen aus co-casting-Verfahren, dass die durch das erfindungsgemäße Herstellungsverfahren erhaltene poröse Polymermembran eine integrale Polymerschicht anstelle von mehreren (z. B. zwei) voneinander abgegrenzten Schichten aufweist. Darüber hinaus können verfahrensbedingt eine hohe Oberflächenporosität von 40 % oder mehr sowie eine Gesamtporosität, welche das 0,8-fache bis 1,4-fache der Oberflächenporosität beträgt, erhalten werden.

Die Oberflächenporosität einer Membranoberfläche ist definiert als das Verhältnis des Flächenanteils der Poren an der Membran-Gesamtfläche direkt an der jeweiligen Membranoberfläche. Die Bestimmung der Oberflächenporosität kann erfindungsgemäß wie nachfolgend beschrieben erfolgen.

Zugrunde gelegt wird eine REM-Aufnahme der jeweiligen Oberfläche. Das erhaltene Bild wird mittels einer computergestützten Analyse zunächst binarisiert, um zwischen Membrankörper (Bulk-Material) und Pore zu differenzieren. Vorzugsweise wird dabei die Methode nach Otsu verwendet (Nobuyuki Otsu (1979). "A threshold selection method from gray-level histograms". IEEE Trans. Sys., Man., Cyber. 9 (1): 62-66). Das binarisierte Bild wird im folgenden Schritt hinsichtlich der jeweiligen Flächenanteile ausgewertet, um einen Wert für die Oberflächenporosität zu erhalten.

Die besonderen strukturellen Merkmale der durch das erfindungsgemäße Herstellungsverfahren erhaltenen einlagigen Polymermembran können durch die Gegenwart der Schutzlösungsschicht erhalten werden. Die Schutzlösungsschicht beeinflusst den Stoffaustausch der Gießlösungsschicht mit der Umgebung, als auch die Grenzflächenspannung zwischen den in Kontakt stehenden Phasen, was maßgeblichen Einfluss auf die Fällung der Membran bzw. die Phaseninversion/Phasenseparation in Schritt (E) hat. In gewöhnlichen Herstellungsverfahren wird die Phasenseparation allein durch die Umgebungsbedingungen (z. B. Zusammensetzung der Atmosphäre oder des Fällbades, Druck und Temperatur) beeinflusst. Durch die Gegenwart der Schutzlösungsschicht wird eine zusätzliche Möglichkeit bereitgestellt, die Phasenseparation zu beeinflussen, wodurch bisher nicht zugängliche Polymermembranen hergestellt werden können.

Die membranbildende Gießlösung unterliegt keiner besonderen Einschränkung. Gemäß der vorliegenden Erfindung kann jedwede Lösung eines zur Membranbildung geeigneten Polymers verwendet werden. Die Gießlösung ist eine homogene Lösung des membranbildenden Polymers, die daneben ein Lösungsmittel für das Polymer enthält. Gegebenenfalls können gemäß der vorliegenden Erfindung ein oder mehrere Hilfsstoffe in der Gießlösung enthalten sein. Geeignete Hilfsstoffe sind erfindungsgemäß Quellmittel, Lösungsvermittler, Hydrophilisierungsmittel, Porenbildner (Porogene) und/oder Nichtlösungsmittel für das membranbildende Polymer. Derartige Hilfsstoffe sind dem Fachmann bekannt und an das membranbildende Polymer angepasst. Vorzugsweise besteht die Gießlösung aus dem membranbildenden Polymer, dem Lösungsmittel sowie gegebenenfalls einem oder mehreren Hilfsstoffen, vorzugsweise einem Nichtlösungsmittel.

Falls in der Gießlösung ein Nichtlösungsmittel (oder ein anderes Fällmittel) für das membranbildende Polymer enthalten ist, so liegt das Nichtlösungsmittel (oder Fällmittel) maximal in einer Konzentration vor, die nicht ausreicht, um zu einer Fällung des membranbildenden Polymers zu führen. Vorzugsweise besteht die Gießlösung aus dem Lösungsmittel für das membranbildende Polymer, dem membranbildenden Polymer und einem Nichtlösungsmittel(gemisch). Geeignete Nichtlösungsmittel sind beispielsweise Wasser, Glycerin, Isopropanol, Ethanol und Gemische daraus.

Vorzugsweise ist das membranbildende Polymer ausgewählt aus der Gruppe, bestehend aus Celluloseacetat, Cellulosenitrat, Polysulfon, Polyvinylidendifluorid (PVDF), Polyethersulfon, Polyetheretherketon (PEEK), Polyacrylnitril, Polymethylmethacrylat (PMMA) und Gemischen daraus, wobei Celluloseacetat bevorzugt ist. Besonders bevorzugt ist das membranbildende Polymer ein Gemisch aus Cellulosediacetat und Cellulosetriacetat.

Das Lösungsmittel für das membranbildende Polymer ist eine Flüssigkeit, welche dazu in der Lage ist, das membranbildende Polymer zu lösen. Vorzugsweise weist es für das membranbildende Polymer (beziehungsweise jedes der membranbildenden Polymere) bei Normalbedingungen (25°C, 1013 hPa) eine Löslichkeit von (jeweils) mindestens 2 Gew.-%, besonders bevorzugt mindestens 5 Gew.-% auf. Geeignete Lösungsmittel sind dem Fachmann bekannt.

Geeignete Lösungsmittel/Polymerkombinationen sind beispielsweise Dichlormethan und Celluloseacetat, 2-Pyrrolidon und Polyethersulfon, Aceton und Celluloseacetat, N-Methylpyrrolidon und Polyethersulfon, Dioxan und Celluloseacetat, γ-Butyrolacton und Polyethersulfon sowie Gemische daraus. Bevorzugte Lösungsmittel für Celluloseacetat sind Dioxan und Aceton, wobei ein Gemisch aus diesen besonders bevorzugt ist. Ein geeignetes Lösungsmittel für Polyethersulfon ist N-Methylpyrrolidon.

Der Fachmann ist auf Grundlage seiner Fachkenntnisse in der Lage, aus dem membranbildenden Polymer und dem Lösungsmittel eine Gießlösung bereitzustellen.

Schritt (A) umfasst vorzugsweise die Schritte

(A1) Vorlegen des Lösungsmittels für das membranbildende Polymer;
(A2) Zugeben des membranbildenden Polymers zu dem Lösungsmittel;
(A3) gegebenenfalls Zugeben des oder der Hilfsstoffe(s), vorzugsweise eines Nichtlösungsmittels für das membranbildende Polymer; und
(A4) Rühren des Gemisches des Lösungsmittels, des Polymers, und gegebenenfalls des oder der Hilfsstoffe(s) unter Bildung der homogenen Gießlösung.

Die in Schritt (B) bereitgestellte Schutzlösung ist nicht fällend. Das heißt, sie ist so beschaffen, dass sie bei Kontakt mit der Gießlösung in Schritt (D) keine Fällung (Phaseninversion oder Phasenseparation) der Gießlösungsschicht auslöst. Darüber hinaus ist die Schutzlösung nicht membranbildend. Das heißt, sie ist so zusammengesetzt, dass aus ihr selbst keine Membran oder Membranlage hervorgeht.

Erfindungsgemäß kann eine Lösung eines nicht zur Membranbildung fähigen Polymers (Surrogatpolymer) und ein Lösungsmittel dafür verwendet werden. Allerdings ist es auch möglich, dass die Schutzlösung kein Surrogatpolymer und/oder kleinere Moleküle zur Änderung der Viskosität oder Lösungseigenschaften enthält. Eine Schutzlösung, die kein Surrogatpolymer enthält, umfasst 2-Pyrrolidon, beziehungsweise besteht daraus.

Vorzugsweise weist die Schutzlösung bei Normalbedingungen (25°C, 1013 hPa) eine Viskosität von mindestens 0,8 cP auf. Es ist zudem bevorzugt, dass die Viskosität der Schutzlösung bei Normalbedingungen nicht mehr als 100000 cP beträgt.

Erfindungsgemäß kann in der Schutzlösung ein membranbildendes Polymer enthalten sein, allerdings höchstens in einer Konzentration, die nicht ausreicht, damit aus der Schutzlösung eine Membran(lage) hervorgeht. Vorzugsweise ist ein membranbildendes Polymer höchstens mit einem Anteil von 5 Gew.-%, vorzugsweise höchstens 1 Gew.-% enthalten. Es ist bevorzugt, dass die Schutzlösung kein membranbildendes (das heißt kein zur Membranbildung fähiges) Polymer enthält.

In Schritt (B) wird vorzugsweise in ähnlicher Weise wie in Schritt (A) eine Schutzlösung bereitgestellt, mit der Maßgabe, dass die Schutzlösung ein nicht zur Membranbildung fähiges Polymer (Surrogatpolymer) enthält. Das heißt, die Schutzlösung kann erfindungsgemäß wie eine übliche Gießlösung zur Membranbildung hergestellt werden, wobei anstelle eines membranbildenden Polymers ein Surrogatpolymer, welches nicht zur Membranbildung befähigt ist, verwendet wird.

Das Surrogatpolymer ist ein Polymer oder mehrere Polymere, ausgewählt aus der Gruppe, bestehend aus Polyvinylpyrrolidon, Polyethylenglykol, Polysacchariden und/oder Polyvinylalkohol. Der Gehalt des Surrogatpolymers in der Schutzlösung beträgt vorzugsweise mindestens 1 Gew.-%, besonders bevorzugt mindestens 5 Gew.-% und insbesondere bevorzugt mindestens 20 Gew.-%. Es ist bevorzugt, dass der Gehalt des Surrogatpolymers nicht mehr als 80 Gew.-%, besonders bevorzugt nicht mehr als 70 Gew.-%, insbesondere bevorzugt nicht mehr als 60 Gew.-% beträgt.

Als Lösungsmittel zur Herstellung der bevorzugten, das Surrogatpolymer enthaltenden Schutzlösung geeignet sind erfindungsgemäß alle Lösungsmittel, die imstande sind, das Surrogatpolymer zu lösen und die kein Fällmittel für das membranbildende Polymer darstellen. Als Lösungsmittel für das Surrogatpolymer können auch Lösungsmittelgemische verwendet werden. Erfindungsgemäß geeignete Paarungen von Surrogatpolymer und Lösungsmittel dafür sind beispielsweise Polyethylenglykol (PEG) und N-Methylpyrrolidon (NMP), Polyvinylpyrrolidon (PVP) und Dioxan, PVP und Aceton.

Die Schutzlösung kann die gleichen Hilfsstoffe wie die Gießlösung enthalten, auch ein Nichtlösungsmittel für das membranbildende Polymer, sofern die Konzentration nicht zu einer Fällung an der Grenzfläche zwischen Gießlösung und Schutzlösung führt.

Erfindungsgemäß kann in der Schutzlösung ein Fällmittel (insbesondere ein Nichtlösungsmittel) oder ein Fällmittelgemisch für das membranbildende Polymer enthalten sein, allerdings nur in einer Konzentration, die nicht ausreicht, um bei Kontakt der Schutzlösung mit der Gießlösung zu einer Fällung des membranbildenden Polymers zu führen. Ein geeignetes Nichtlösungsmittel für die Schutzlösung ist beispielsweise Wasser, Glycerin, Isopropanol oder Ethanol.

Gemäß einer bevorzugten Ausführungsform der vorliegenden Erfindung enthält die Schutzlösung kein Fällmittel für das membranbildende Polymer.

Es kann ein von dem Lösungsmittel der Gießlösung verschiedenes Lösungsmittel oder Lösungsmittelgemisch verwendet werden. Vorzugsweise wird für die Schutzlösung das gleiche Lösungsmittel(gemisch) wie für die Gießlösung verwendet. Bevorzugte Lösungsmittel für die Schutzschicht sind Dioxan und Aceton, wobei ein Gemisch aus diesen besonders bevorzugt ist.

Besonders bevorzugt bestehen die Schutzlösung und die daraus gebildete Schutzlösungsschicht aus dem Surrogatpolymer, dem Lösungsmittel dafür und einem Nichtlösungsmittel.

Schritt (B) umfasst vorzugsweise die Schritte

(B1) Vorlegen des Lösungsmittels für das Surrogatpolymer;
(B2) Zugeben des Surrogatpolymers zu dem Lösungsmittel für das Surrogatpolymer;
(B3) gegebenenfalls Zugeben des oder der Hilfsstoffe(s), und
(B4) Rühren des Gemisches des Lösungsmittels für das Surrogatpolymer und des Surrogatpolymers unter Bildung der Schutzlösung.

Bei dem in Schritt (B3) gegebenenfalls verwendeten Hilfsstoff kann es sich beispielsweise um ein Nichtlösungsmittel für das membranbildende Polymer handeln.

Der in Schritt (C) bereitgestellte Träger unterliegt keiner besonderen Einschränkung. Erfindungsgemäß kann jeder Träger verwendet werden, der für Membranherstellungsverfahren aus dem Stand der Technik geeignet ist. Der Träger weist vorzugsweise eine ebene Oberfläche auf und ist inert gegenüber den verwendeten Stoffen (Gießlösung, Schutzlösung, deren Bestandteile, etc.). Vorzugsweise dient als Träger ein bewegtes Band (Förderband) oder eine Trommel, wodurch eine kontinuierliche Verfahrensführung ermöglicht werden kann.

In Schritt (D) werden zumindest die Gießlösung und die Schutzlösung auf den Träger aufgebracht. Dadurch wird ein Film gebildet, der eine Gießlösungsschicht und eine Schutzlösungsschicht umfasst, wobei die Gießlösungsschicht an die Schutzlösungsschicht angrenzt. Erfindungsgemäß grenzt die Gießlösungsschicht direkt an die Schutzlösungsschicht an, das heißt, es sind dazwischen keine weiteren Schichten vorhanden. Gießlösungsschicht und Schutzlösungsschicht weisen eine gemeinsame Grenzfläche auf.

Die Zeitspanne zwischen dem Aufbringen der Gießlösungsschicht und dem Aufbringen der Schutzlösungsschicht ist erfindungsgemäß nicht eingeschränkt. Um einer unerwünschten vorzeitigen Fällung/Phaseninversion vorzubeugen, ist es allerdings von Vorteil, vorstehende Zeitspanne möglichst kurz zu halten. Vorzugsweise beträgt diese Zeitspanne nicht mehr als 5 Minuten, besonders bevorzugt höchstens 1 Minute, insbesondere bevorzugt höchstens 30 Sekunden.

Darüber hinaus ist es von Vorteil, wenn sich Schritt (E) direkt an Schritt (D) anschließt, das heißt kein weiterer Schritt zwischen den Schritten (E) und (D) durchgeführt wird. Insbesondere ist vorteilhaft, zwischen den Schritten (E) und (D) keinen Trocknungsschritt durchzuführen.

Neben der in Schritt (A) bereitgestellten Gießlösung wird in dem erfindungsgemäßen Verfahren keine weitere Gießlösung, welche zur Bildung einer Polymermembran geeignet ist, verwendet. Das heißt, die in Schritt (A) bereitgestellte Gießlösung ist die einzige Gießlösung zur Membranbildung. Die Membran entsteht allein aus dieser einzigen Gießlösung. Der in Schritt (D) gebildete Film enthält somit nur eine Gießlösung.

Es ist allerdings möglich, neben der Gießlösung und der Schutzlösung eine oder mehrere weitere Schutzlösungen aufzubringen, wodurch ein Film mit Gießlösungsschicht, Schutzlösungsschicht und weiterer/weiteren Schutzlösungsschicht(en) erhalten wird. Vorzugsweise besteht der Film aus der Gießlösungsschicht und der Schutzlösungsschicht, sodass keine weiteren Schichten oder Filme auf dem Träger vorhanden sind. Das heißt, der Träger ist vorzugsweise nur mit dem Film aus der Gießlösungsschicht und der Schutzlösungsschicht beschichtet.

Gemäß einer bevorzugten Ausführungsform wird in Schritt (D) der Film dadurch gebildet, dass die Gießlösung auf den Träger aufgebracht wird, wodurch sich die Gießlösungsschicht bildet, und die Schutzlösung auf die Gießlösungsschicht aufgebracht wird, wodurch sich die Schutzlösungsschicht bildet. Gemäß einer alternativen Ausführungsform wird in Schritt (D) die Schutzlösung auf den Träger aufgebracht, wodurch sich die Schutzlösungsschicht bildet, und wird die Gießlösung auf die Schutzlösungsschicht aufgebracht, wodurch sich die Gießlösungsschicht bildet, und wird anschließend eine weitere Schutzlösung auf die Gießlösungsschicht aufgebracht wird, wodurch sich eine weitere Schutzlösungsschicht ausbildet. Das heißt, es ist möglich, dass sich die Gießlösungsschicht zwischen der Schutzlösungsschicht und dem Träger befindet. In diesem Fall liegt die Schutzlösungsschicht als Überschichtung vor. Es kann auch alternativ die Schutzlösungsschicht zwischen der Gießlösungsschicht und dem Träger befindlich sein. In diesem Fall liegt eine Schutzlösungsschicht als Überschichtung und eine weitere Schutzlösungsschicht als Unterschichtung vor. Vorzugsweise besteht der in Schritt (D) gebildete Film aus der Gießlösungsschicht und der Schutzlösungsschicht, wobei sich die Gießlösungsschicht zwischen dem Träger und der Schutzlösungsschicht befindet (Schutzlösung liegt als Überschichtung vor).

Das Aufbringen der Gieß- und Schutzlösung(en) in Schritt (D) unterliegt keiner besonderen Einschränkung und kann beispielsweise durch Rakeln oder mittels einer Düse erfolgen.

Das Aufbringen der Gieß- und Schutzlösung(en) in Schritt (D) kann aufeinanderfolgend (sequentiell, wie beispielsweise in EP 0 689 863 B1 beschrieben) oder im Wesentlichen gleichzeitig, wie beispielsweise in US 2015/0258499 A1 beschrieben, durchgeführt werden.

Wie bereits vorstehend erwähnt, beeinflusst die Schutzlösungsschicht die Phasenseparation. Insbesondere wird, überraschenderweise unabhängig davon, ob die Schutzlösungsschicht als Unter- und/oder Überschichtung vorliegt, eine im Vergleich zu gewöhnlichen Verfahren deutlich erhöhte Oberflächenporosität derjenigen Hauptoberfläche der Membran erhalten, welche eine gemeinsame Grenzfläche mit einer Schutzlösungsschicht besitzt. Zudem weisen die (aus dem) erfindungsgemäßen (Verfahren erhaltenen) Membranen eine Gesamtporosität auf, die in etwa der Oberflächenporosität derjenigen Hauptoberfläche(n) der Membran, welche während des Verfahrens mit der (den) Schutzlösungsschicht(en) eine gemeinsame Grenzfläche bildet (bilden), entspricht.

Mutmaßlich können die vorstehenden überraschenden Wirkungen der Schutzlösungsschicht durch zwei Mechanismen erklärt werden.

Zum einen findet bei Vorhandensein der Schutzlösungsschicht als Überschichtung in der Gießlösungsschicht zunächst keine Phasenseparation statt. Anders als bei herkömmlichen Verfahren existiert kein direkter Kontakt zu einer Schicht, die ein Fällmittel in einer Konzentration enthält, wodurch die Phasenseparation ausgelöst wird. Im erfindungsgemäßen Fall der Überschichtung ist die Phasenseparation der Gießlösungsschicht diffusionslimitiert: Das Fällmittel muss erst durch die Schutzschicht diffundieren und sich in der Gießlösungsschicht anreichern, bevor eine Fällung ausgelöst wird. Dadurch wird überraschenderweise beobachtet, dass die vorstehend für herkömmliche Verfahren beobachtete fällmittelseitige Gelbildung nicht auftritt. Somit wird durch das erfindungsgemäße Herstellungsverfahren keine Hautschicht (*"skin layer"*) mit kleinen Poren und geringer Oberflächenporosität gebildet, sondern es entsteht eine offenporige Struktur mit hoher Oberflächenporosität.

Der zweite Mechanismus erklärt insbesondere den bemerkenswerten Umstand, dass auch dann eine im Vergleich zu einer Membran, die mit direktem Kontakt zum Träger hergestellt wird, höhere trägerseitige Oberflächenporosität beobachtet wird, wenn die Schutzschichtlösung als Unterschichtung vorliegt und in Schritt (E) die Gießlösungsschicht in direkten Kontakt mit dem Fällmittel kommt (nicht erfindungsgemäß). (Allerdings kommt dieser Effekt zumindest teilweise auch dann zum Tragen, wenn die Schutzlösungsschicht als Überschichtung vorliegt. (erfindungsgemäß)) Wird die Gießlösung direkt auf den Träger aufgebracht, bildet sich eine genau definierte Phasengrenze zwischen dem festen Träger und der Gießlösungsschicht aus. Im Gegensatz dazu können die verschiedenen Komponenten der unterschichteten Schutzlösungsschicht einerseits und der Gießlösungsschicht andererseits teilweise in die jeweils andere Schicht diffundieren. Nach diesem Erklärungsmodell wird durch diffusiven Stoffaustausch die Gießlösungsschicht zumindest teilweise mit Bestandteilen der Schutzlösungsschicht geimpft oder imprägniert, wobei die zeitweilige Imprägnierung für die Dauer der Membranherstellung derart die Phaseninversion beeinflusst, dass im Falle der Unterschichtung vergleichbare Effekte wie im Fall der Überschichtung beobachtet werden. Zudem wird durch die Unterschichtung trägerseitig die Grenzflächenspannung der Membran beeinflusst, was eine Verringerung der Koaleszenz während der Membranbildung bewirkt. Auf diese Weise werden naszent gebildete Strukturen stärker konserviert, was ebenfalls zu einer höheren Oberflächenporosität führt. Die Struktur der Membran wird dadurch nicht gestört oder verändert, da die Schutzlösungsschicht in Schritt (F) vollständig entfernt wird. Allerdings ist eine Überschichtung der Gießlösung mit der Schutzschicht gegenüber einer Unterschichtung bevorzugt, weil im Falle der Überschichtung vorstehende Effekte (insbesondere eine hohe Oberflächenporosität und Unterdrückung der Ausbildung einer Hautschicht) stärker ausgeprägt sind.

Das in Schritt (E) verwendete Fällmittel unterliegt keiner besonderen Einschränkung. Erfindungsgemäß können dieselben Fällmittel wie in herkömmlichen Herstellungsverfahren für Polymermembranen verwendet werden. Das Fällmittel führt zu einer Ausfällung (Phaseninversion) des membranbildenden Polymers in der Gießlösungsschicht. Das Fällmittel kann gasförmig oder flüssig sein, oder als gelöster Feststoff vorliegen. Das Fällmittel kann eine einzige Verbindung oder ein Gemisch mehrerer Verbindungen sein. Vorzugsweise ist das Fällmittel in einer Flüssigkeit enthalten, besonders bevorzugt ist das Fällmittel selbst eine Flüssigkeit. Schritt (E) erfolgt vorzugsweise durch Eintauchen des Films in eine Flüssigkeit, welche das Fällmittel enthält oder aus ihm besteht.

Vorzugsweise ist das Fällmittel ein Nichtlösungsmittel für das membranbildende Polymer bzw. jedes der membranbildenden Polymere. Das Nichtlösungsmittel ist eine Flüssigkeit, welche nicht dazu in der Lage ist, das membranbildende Polymer zu lösen. Vorzugsweise weist das Nichtlösungsmittel für das membranbildende Polymer (beziehungsweise jedes der membranbildenden Polymere) bei Normalbedingungen eine Löslichkeit von (jeweils) höchstens 1 Gew.-%, besonders bevorzugt höchstens 0,1 Gew.-% auf. Ein bevorzugtes Fällmittel ist zugleich ein Lösungsmittel für das Surrogatpolymer, wobei Wasser besonders bevorzugt ist. Wenn das Fällmittel zugleich ein Lösungsmittel für das Surrogatpolymer ist, kann die Schutzlösungsschicht in einem Einschrittverfahren entfernt werden.

Das Entfernen der Schutzlösungsschicht(en) in Schritt (F) unterliegt keiner besonderen Einschränkung. Erfindungsgemäß ist es möglich, die Schutzlösungsschicht(en) mechanisch zu entfernen. Vorzugsweise wird die Schutzschicht durch Anwenden eines Lösungsmittels für das Surrogatpolymer entfernt, wobei das Lösungsmittel für das Surrogatpolymer ein Nichtlösungsmittel für das membranbildende Polymer ist. Schritt (F) erfolgt vorzugsweise durch Eintauchen des Films in eine Flüssigkeit, welche das Lösungsmittel für das Surrogatpolymer enthält oder aus ihm besteht. Vorzugsweise wird als Lösungsmittel für das Surrogatpolymer Wasser verwendet.

Alternativ kann das Surrogatpolymer auch durch ein Agens oder mehrere Agenzien chemisch zersetzt werden. Das Agens oder die Agenzien führen selektiv zu einem Abbau des Surrogatpolymers in niedermolekulare lösliche Bestandteile, während das membranbildende Polymer gegenüber einem chemischen Abbau durch das Agens oder die Agenzien inert ist.

Im weiteren Verlauf kann die aus der Gießlösungsschicht erhaltene einlagige Membran einem oder mehreren Waschschritten, und/oder Trocknungsschritten unterzogen werden.

In einem weiteren Aspekt wird eine poröse einlagige Polymermembran ohne Hautschicht beschrieben, wobei mindestens eine der Hauptoberflächen der Polymermembran eine Oberflächenporosität von mindestens 40 % aufweist und die Gesamtporosität der Polymermembran das 0,8-fache bis 1,4-fache der mindestens 40 %-igen Oberflächenporosität beträgt. Eine derartige Membran kann durch das erfindungsgemäße Herstellungsverfahren erhalten werden.

"Hauptoberflächen" sind die beiden Membranoberflächen mit dem größten Flächeninhalt.

Wie bereits vorstehend erwähnt, unterscheidet sich die einlagige Membran dadurch von Polymermembranen aus co-casting-Verfahren, dass die durch das erfindungsgemäße Herstellungsverfahren erhaltene poröse Polymermembran eine integrale Polymerschicht anstelle von mehreren (z. B. zwei) voneinander abgegrenzten Schichten aufweist. Nach dem Stand der Technik sind die einzelnen Schichten durch eine sprunghafte oder diskontinuierliche Änderung in der Porengröße oder in den sonstigen Eigenschaften (Dichte, Porosität, Membranpolymer) in der Grenzfläche zwischen den einzelnen Schichten voneinander abgegrenzt, z. B. in Form der aus EP 1 307 280 B1 bekannten Demarkationslinie zwischen benachbarten Polymerschichten.

Zumindest eine Hauptoberfläche der durch das erfindungsgemäße Herstellungsverfahren erhaltenen Membran weist eine Oberflächenporosität von mindestens 40 % auf, vorzugsweise mindestens 50 %, besonders bevorzugt mindestens 60 %, insbesondere bevorzugt mindestens 70 %, am meisten bevorzugt mindestens 80%. Vorzugsweise weisen beide Hauptoberflächen unabhängig voneinander die vorstehenden Oberflächenporositäten auf.

Es ist ausreichend, wenn eine der Hauptoberflächen der Membran eine Oberflächenporosität von mindestens 40 % aufweist. Das heißt, eine der Hauptoberflächen der Membran kann eine Oberflächenporosität von weniger als 40 % aufweisen. Es ist bevorzugt, dass zumindest die fällmittelseitige Hauptoberfläche eine Oberflächenporosität von mindestens 40 % aufweist. Vorzugsweise weisen beide Hauptoberflächen der Membran eine Oberflächenporosität von mindestens 40 % auf.

Die Membran weist keine Hautschicht ("*skin layer*") auf, was mit einer hohen Durchflussleistung einhergeht. Das Vorhandensein einer Hautschicht auf einer Hauptoberfläche kann insbesondere dann ausgeschlossen werden, wenn deren mittlere Porengröße mindestens 10 nm, vorzugsweise mindestens 15 nm beträgt. Bei einer solchen mittleren Porengröße sind in einer rasterelektronenmikroskopischen Aufnahme der betreffenden Hauptoberfläche bei 20000-facher Vergrößerung noch poröse Strukturen erkennbar. Für die Bestimmung der mittleren Porengröße der Hauptoberfläche kann das vorstehend beschriebene Verfahren der Flüssig-Flüssig-Verdrängungs-Porosimetrie auf Grundlage zweier nicht mischbarer Flüssigkeiten eingesetzt werden.

Die Gesamtporosität der durch das erfindungsgemäße Herstellungsverfahren erhaltenen Membran liegt im Bereich der Oberflächenporosität der Hauptoberfläche mit höherer Oberflächenporosität (porösere Hauptoberfläche) und beträgt das 0,8-fache bis 1,4-fache der mindestens 40%-igen Oberflächenporosität. Sofern beide Hauptoberflächen der Membran eine Oberflächenporosität von mindestens 40% aufweisen, beträgt die Gesamtporosität das 0,8-fache bis 1,4-fache der höheren Oberflächenporosität. Vorzugsweise beträgt die Gesamtporosität mindestens das 0,9-fache, vorzugsweise mindestens das 0,95-fache, besonders bevorzugt mindestens das 0,99-fache der Oberflächenporosität der poröseren Hauptoberfläche. Vorzugsweise beträgt die Gesamtporosität höchstens das 1,3-fache, vorzugsweise höchstens das 1,2-fache, besonders bevorzugt höchstens das 1,1-fache der Oberflächenporosität der poröseren Hauptoberfläche. Die durch das erfindungsgemäße Herstellungsverfahren erhaltene Membran weist eine Gesamtporosität von mindestens 32 % auf, bevorzugt mindestens 40 %, insbesondere bevorzugt mindestens 50 %, noch bevorzugter mindestens 60 %, noch weiter bevorzugt mindestens 70 % und am meisten bevorzugt mindestens 80 %.

Eine hohe Porosität bedeutet, dass ein hoher Anteil des Membranvolumens von Poren eingenommen wird. Daher geht eine höhere Porosität bei gleichem Membranvolumen und Porengröße mit einer höheren Effizienz (Trenn- bzw. Filtrationsleistung) einher.

Die Dicke der durch das erfindungsgemäße Herstellungsverfahren erhaltenen Membran ist grundsätzlich nicht eingeschränkt. Vorzugsweise beträgt die Dicke höchstens 400 μm, bevorzugt höchstens 300 μm, besonders bevorzugt höchstens 250 μm.

Die durch das erfindungsgemäße Herstellungsverfahren erhaltene einlagige poröse Polymermembran kann sowohl symmetrisch als auch asymmetrisch sein. Gemäß einer bevorzugten Ausführungsform ist die Membran asymmetrisch, das heißt, sie weist einen Asymmetriefaktor von mindestens 1,5 auf. Der Asymmetriefaktor beträgt vorzugsweise mindestens 2,5. Die Obergrenze des Asymmetriefaktors der Membran ist nicht eingeschränkt und beträgt vorzugsweise 10. Das heißt, die Polymermembran weist vorzugsweise einen Asymmetriefaktor von 1,5 bis 10 auf.

Der Asymmetriefaktor einer asymmetrischen Membran oder Membranlage ist das Verhältnis der maximalen Porengröße zur minimalen Porengröße der Membran oder Membranlage, wobei der maximalen bzw. minimalen Porengröße einer Membran(lage) der gesamte Körper der Membran(lage) zugrunde gelegt wird. Eine Bestimmung der integralen Porengrößenverteilung kann analog zur Bestimmung der Oberflächenporosität erfolgen. Mittels REM wird eine Aufnahme des Membranquerschnitts (senkrecht zu den Membranhauptoberflächen) mit ausreichender Auflösung aufgenommen. Das erhaltene Bild wird mittels einer computergestützten Analyse zunächst binarisiert, um zwischen Membrankörper und Pore zu differenzieren. Vorzugsweise wird dabei die bereits vorstehend erwähnte Methode nach Otsu verwendet (Nobuyuki Otsu (1979), "A threshold selection method from gray-level histograms", IEEE Trans. Sys., Man., Cyber. 9 (1), 62-66). Das binarisierte Bild wird im folgenden Schritt hinsichtlich der jeweiligen Abstände zwischen Membrankörper und Pore über den gesamten Membrankörper ausgewertet, um so eine integrale Porengrößenverteilung zu erhalten. Aus dem jeweiligen Minimum und Maximum kann man den Asymmetriefaktor berechnen.

Die mittlere Porengröße der durch das erfindungsgemäße Herstellungsverfahren erhaltenen Polymermembran unterliegt keiner besonderen Einschränkung. Beispielsweise kann die Membran eine Mikro-, Ultra-, Nano- oder Revers-Osmosemembran sein. Bevorzugt ist die Membran eine Mikrofiltrationsmembran oder Ultrafiltrationsmembran, besonders bevorzugt eine Ultrafiltrationsmembran.

Gemäß einer bevorzugten Ausführungsform ist die durch das erfindungsgemäße Herstellungsverfahren erhaltene Membran aus einem membranbildenden Polymer, ausgewählt aus der Gruppe, bestehend aus Celluloseacetat, Cellulosenitrat, Polysulfon, Polyvinylidendifluorid (PVDF), Polyethersulfon, Polyetheretherketon (PEEK), Polyacrylnitril, Polymethylmethacrylat (PMMA) und Gemischen daraus, aufgebaut, wobei Celluloseacetat bevorzugt ist. Besonders bevorzugt ist ein Gemisch aus Cellulosediacetat und Cellulosetriacetat.

Hinsichtlich der möglichen Verwendung der durch das erfindungsgemäße Herstellungsverfahren erhaltenen Membran besteht keine besondere Einschränkung. Sie kann zur Filtration verwendet werden, insbesondere zur Filtration von Viren, Proteinen oder Makromolekülen.

Figur 1 zeigt eine REM-Aufnahme der Seite (Hauptoberfläche) der Membran aus Beispiel 1, die aus einer Gießlösungsschicht gebildet ist, die während der Herstellung an eine Überschichtungslösung grenzte (Luftseite). Klar zu erkennen ist eine poröse Struktur, die sich in die Tiefe der Membran hinein erstreckt.

Figur 2 zeigt eine REM-Aufnahme der trägerseitigen (glasplattenseitigen) Hauptoberfläche der Membran aus Beispiel 1 und zeigt eine typische Porenstruktur. Die Struktur ist (im Gegensatz zur überschichtungsseitigen Hauptoberfläche) von der Überschichtung weitgehend unbeeinflusst und zeigt eine sehr ähnliche Struktur wie die trägerseitige Hauptoberfläche der Membran aus Vergleichsbeispiel 1.

Figur 3 zeigt eine REM-Aufnahme der luftseitigen (die Luftseite ist die der Trägerseite gegenüberliegende Seite) Hauptoberfläche der Membran aus Vergleichsbeispiel 1. Bei zehntausendfacher Vergrößerung sind keine Poren zu erkennen.

Figur 4 zeigt eine REM-Aufnahme der trägerseitigen Hauptoberfläche der Membran aus Vergleichsbeispiel 1. Es sind keine nennenswerten Unterschiede zur bandseitigen Oberflächenstruktur der Membran aus Beispiel 1 zu erkennen.

Figur 5 zeigt eine REM-Aufnahme der trägerseitigen Hauptoberfläche der Membran aus Vergleichsbeispiel 2. Eine ausgeprägte Porenstruktur ist zu erkennen.

Figur 6 zeigt eine REM-Aufnahme der überschichtungsseitigen Hauptoberfläche der Membran aus Vergleichsbeispiel 2. Klar zu erkennen ist eine Hautschicht ohne erkennbare Poren auf der Oberfläche.

Figur 7 zeigt eine REM-Aufnahme der Membran aus Beispiel 2. Zu erkennen ist die Membranseite, welche in Kontakt mit der Schutzlösung (Surrogat-Lösung 1) stand (Trägerseite). Es ist deutlich zu erkennen, dass die trägerseitige Hauptoberfläche der Membran eine hohe Oberflächenporosität aufweist.

Figur 8 zeigt eine REM-Aufnahme der Membran aus Vergleichsbeispiel 3. Zu erkennen ist die Membranseite, welche in Kontakt mit der Glasoberfläche stand (Trägerseite) und eine im Vergleich zu Beispiel 2 geringe Oberflächenporosität aufweist.

Figur 9 zeigt eine REM-Aufnahme der Luftseite der Membran aus Beispiel 3. Deutlich zu erkennen sind die globuläre Struktur, eine hohe Oberflächenporosität und das Fehlen einer Hautschicht.

Figur 10 zeigt eine REM-Aufnahme der Luftseite der Membran aus Vergleichsbeispiel 4. Deutlich zu erkennen sind die Abwesenheit poröser Strukturen und das Vorhandensein einer Hautschicht.

Figur 11 zeigt eine REM-Aufnahme der Membran aus Beispiel 2. Zu erkennen ist die Membranseite, welche in Kontakt mit der Schutzlösung 2 (Surrogat-Lösung 2) stand (Luftseite). Deutlich zu erkennen sind die globuläre Struktur, eine hohe Oberflächen porosität und das Fehlen einer Hautschicht.

Figur 12 zeigt eine REM-Aufnahme der Membran aus Vergleichsbeispiel 3. Zu erkennen ist die Membranseite, welche nicht in Kontakt mit der Glasoberfläche stand (Luftseite).

Die vorliegende Erfindung wird anhand der folgenden nicht einschränkenden Beispiele näher erläutert.

Beispiele

Beispiel 1: Herstellung einer asymmetrischen Mikrofiltrationsmembran aus Celluloseacetat im Fällbadverfahren

Gießlösung

Die Gießlösung wurde aus den Bestandteilen aus Tabelle 1 in einem Rührreaktor bei 40 °C hergestellt. Dabei wurden die Komponenten Aceton und Dioxan vorgelegt und die Feststoffe in Pulverform zugegeben. Sobald die Polymerlösung keine Trübung mehr aufwies (nach etwa 3 Stunden), wurde Formamid zugegeben. Die Gießlösung ist in dieser Zusammensetzung bei Zimmertemperatur etwa 48 Stunden haltbar.

Tabelle 1: Zusammensetzung der Gießlösung

| Bestandteile | Massenanteil [%] |
| --- | --- |
| Cellulosetriacetat (Eastman, CA 398) (12,8%) | 12,8 |
| Cellulosediacetat (Acetati, Aceplast PC/FG) (3,2%), | 3,2 |
| Aceton | 28 |
| Dioxan | 28 |
| Formamid | 28 |

Schutzlösung

Die Schutzlösung (Überschichtung) wurde entsprechend der Herstellung der Gießlösung hergestellt. Die Zusammensetzung der Schutzlösung ist in Tabelle 2 angegeben.

Tabelle 2: Zusammensetzung der Schutzlösung

| Bestandteile | Massenanteil [%] |
| --- | --- |
| Polyvinylpyrrolidon (PVP, $M_w$=360000 g/mol) vom Typ "K90" der Firma BASF | 10 |
| Aceton | 30 |
| Dioxan | 30 |
| Formamid | 30 |

Sofern nicht anders angegeben, wurden die Schutz- und Gießlösungen der nachstehenden Beispiele so hergestellt, wie in Beispiel 1 beschrieben.

Membranherstellung

Die Gießlösung mit der Zusammensetzung aus Tabelle 1 wurde in einer trockenen (wasserfreien) Stickstoffatmosphäre bei einer Temperatur einer als Träger verwendeten Glasplatte und der Atmosphäre von 22 °C auf der Glasplatte mit einem Rakel zu einer Dicke von 300 $\mu$m gleichmäßig ausgestrichen. Danach wurde die Überschichtung in einer Dicke 200 $\mu$m über den Gießlösungsfilm gerakelt. Der Vorgang des Auftrags war nach weniger als 30 Sekunden abgeschlossen.

In einer Luftatmosphäre mit 22 °C und <40 % relativer Luftfeuchte wurde ein Wasserbad mit 22 °C aufgestellt, das die Glasplatte vollständig bedecken konnte. Die ausgestrichenen Schichten auf der Glasplatte wurden von einer Seite der Glasplatte aus in weniger als 20 Sekunden vollständig in das Wasserbad getaucht und für 30 min geschüttelt. Das Wasser wurde nach diesen 30 min ausgetauscht und die Glasplatte mit der inzwischen ausgefallenen Membran erneut für 30 min geschüttelt. Nach vollständiger Entfernung der Überschichtung wurde die Membran von der Glasplatte gehoben und auf einer Vliesunterlage bei 22 °C getrocknet. An der trockenen Membran wurden die folgenden Charakterisierungen durchgeführt: Rasterelektronenmikroskopie (REM) und Durchfluss.

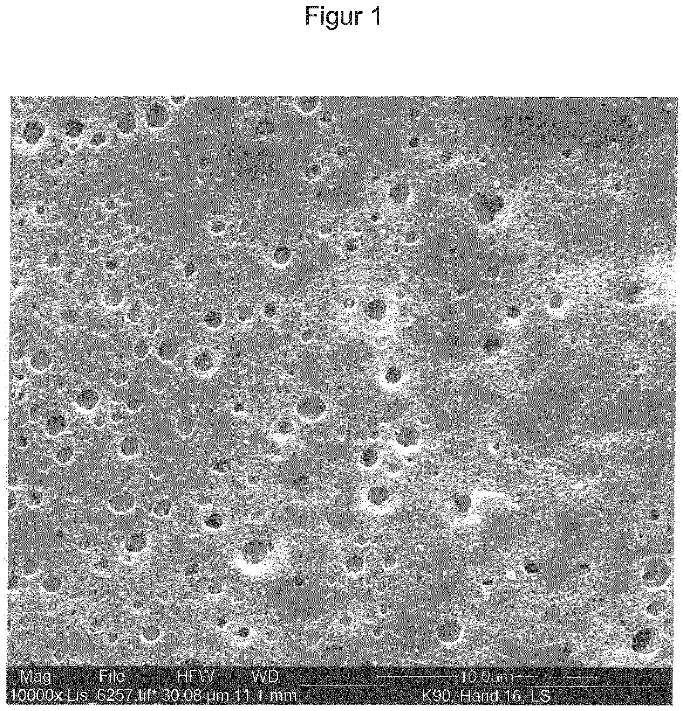

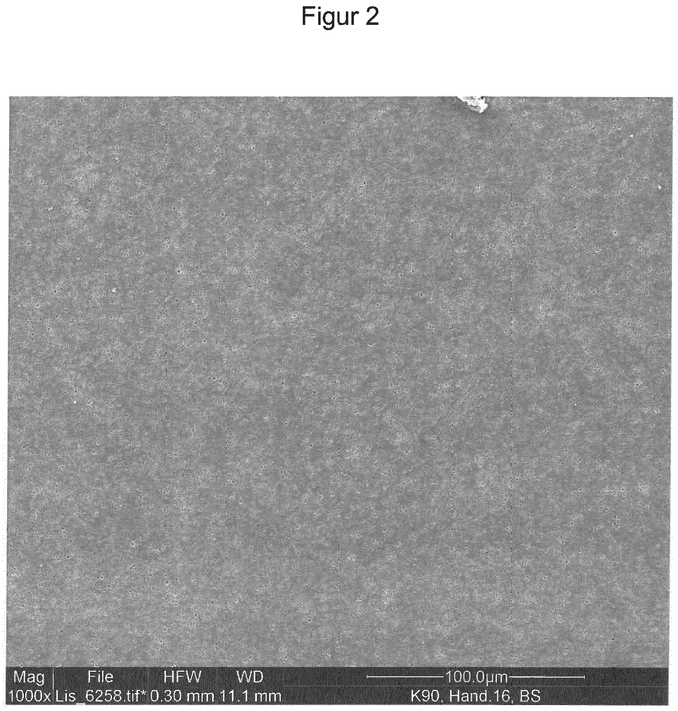

REM-Aufnahmen der Hauptoberflächen der Membran aus Beispiel 1 sind in Figuren 1 und 2 gezeigt. Aus Figur 1 ist deutlich eine offenporige Struktur mit hoher Porosität zu erkennen.

Die Permeabilität betrug 0,89±0,1 mL/(min·cm$^2$·bar)

Vergleichsbeispiel 1

Für Vergleichsbeispiel 1 wurde eine zur Gießlösung von Beispiel 1 identische Gießlösung verwendet. Die Schutzlösung wurde weggelassen.

Membranherstellung

Die Gießlösung mit der Zusammensetzung aus Tabelle 1 wurde in einer trockenen (wasserfreien) Stickstoffatmosphäre bei einer Temperatur einer als Träger verwendeten Glasplatte und der Atmosphäre von 22 °C auf der Glasplatte mit einem Rakel zu einer Dicke von 300 μm gleichmäßig ausgestrichen. Es wurde keine Schutzlösung aufgebracht. Der Vorgang des Auftrags war nach weniger als 30 Sekunden abgeschlossen.

In einer Luftatmosphäre mit 22 °C und <40% relativer Luftfeuchte wurde ein Wasserbad mit 22 °C aufgestellt, das die Glasplatte vollständig bedecken konnte. Die ausgestrichene Schicht auf der Glasplatte wurde von einer Seite der Glasplatte aus in weniger als 20 Sekunden vollständig in das Wasserbad getaucht und für 30 min geschüttelt. Das Wasser wurde nach diesen 30 min ausgetauscht und die Glasplatte mit der inzwischen ausgefallenen Membran erneut für 30 min geschüttelt. Danach wurde die Membran von der Glasplatte gehoben und auf einer Vliesunterlage bei 22 °C getrocknet. An der trockenen Membran wurden die folgenden Charakterisierungen durchgeführt: Rasterelektronenmikroskopie (REM) und Durchfluss.

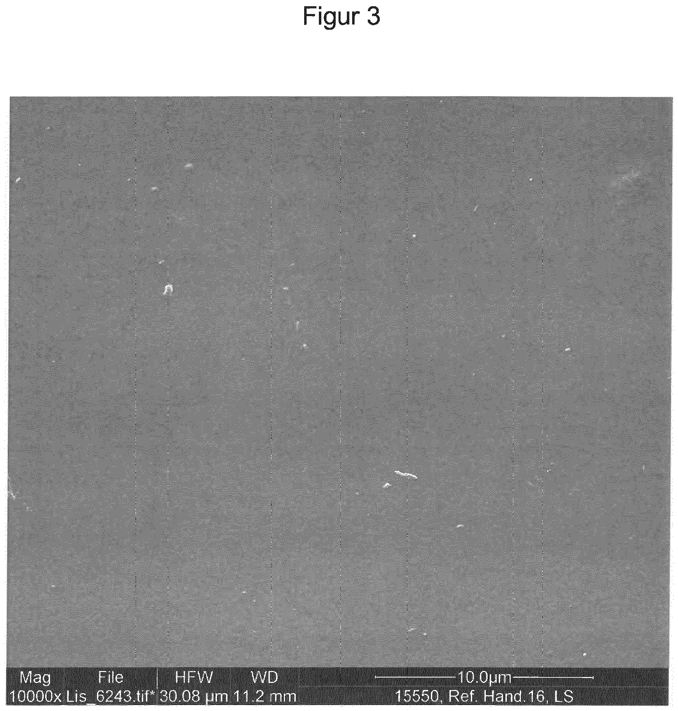

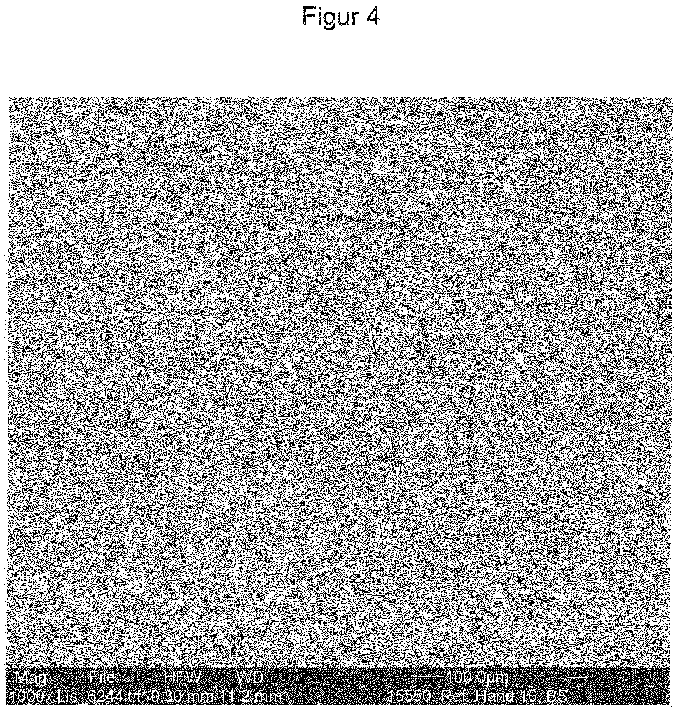

REM-Aufnahmen der Hauptoberflächen der Membran aus Vergleichsbeispiel 1 sind in Figuren 3 und 4 gezeigt. Aus Figur 3 ist deutlich eine dichte Struktur mit niedriger Porosität (Hautschicht) zu erkennen.

Die Permeabilität betrug weniger als 0.1 mL/(min·cm$^2$·bar)

Vergleichsbeispiel 2: Beispiel 3 von EP 2 134 455 B1

Vergleichsbeispiel 2 orientiert sich an Beispiel 3 von EP 2 134 455 B1. Dabei wurde eine Schutzlösung zur Überschichtung verwendet, die ein Fällmittel in einer Konzentration enthält, welche bei Kontakt mit der Gießlösung zur Ausfällung des membranbildenden Polymers führt. Ansonsten wurde Vergleichsbeispiel 2 wie Beispiel 1 durchgeführt.

Tabelle 3: Zusammensetzung der Gießlösung

| Bestandteile | Massenanteil [%] |
|---|---|
| Polyethersulfon (PESU) vom Typ "Ultrason E6020" der Firma BASF | 13 |
| PEG 400 | 70 |
| N-Methylpyrrolidon (NMP) | 30 |

Tabelle 4: Zusammensetzung der Überschichtungslösung

| Bestandteile | Massenanteil [%] |
|---|---|
| Polyethylenglykol 400 (PEG 400) | 80 |
| Wasser | 20 |

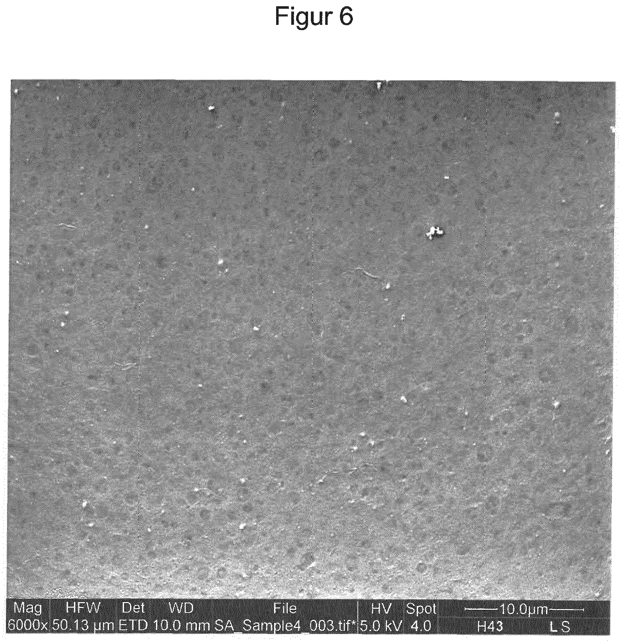

REM-Aufnahmen der Hauptoberflächen der Membran aus Vergleichsbeispiel 1 sind in Figuren 5 und 6 gezeigt. Aus Figur 6 ist deutlich eine dichte Struktur mit niedriger Porosität (Hautschicht) zu erkennen.

Beispiel 2: Unterschichtung und Überschichtung

Die Zusammensetzungen der in diesem Beispiel verwendeten Gießlösung und Schutzlösungen sind in Tabellen 5, 6 und 7 angegeben.

Tabelle 5: Zusammensetzung der Gießlösung

| Bestandteile | Massenanteil [%] |
|---|---|
| Polyethersulfon vom Typ "Ultrason E6020" der Firma BASF | 12,00 % |
| 2-Pyrrolidon | 77,00 % |
| PVP-VA-Copolymer vom Typ "PVP S630" der Firma Ashland | 3,00 % |
| Glycerin | 5,00 % |
| Wasser | 3,00 % |

Tabelle 6: Zusammensetzung der Schutzlösung 1 (Unterschichtungslösung)

| Bestandteile | Massenanteil [%] |
|---|---|
| 2-Pyrrolidon | 70 % |
| Polyethylenglykol (Mw = 30000 g/mol) | 30 % |

Tabelle 7: Zusammensetzung der Schutzlösung 2 (Überschichtungslösung)

| Bestandteile | Massenanteil [%] |
|---|---|
| 2-Pyrrolidon | 100 |

Membranherstellung

Die Schutzlösung 1 (Surrogat-Lösung 1) wurde auf 60 °C erhitzt und unter einer Luftatmosphäre bei 22 °C und <40% relativer Luftfeuchte auf einer Glasplatte mit einem Rakel zu einer Dicke von 100 $\mu$m gleichmäßig ausgestrichen. Anschließend wurden die aufgebrachte Schutzlösung sowie die Glasplatte auf Raumtemperatur abgekühlt.

Auf die Surrogat-Lösung 1 wurde im Anschluss die Gießlösung mit einem Rakel mit einer Dicke von 200 $\mu$m gleichmäßig aufgebracht. Im Anschluss wurde Schutzlösung 2 (Surrogat-Lösung 2) in einer Dicke von 100 $\mu$m mittels eines Rakels überschichtet.

Es wurde ein Wasserbad mit 22 °C aufgestellt, das die Glasplatte vollständig bedecken konnte. Die Glasplatte mit dem Film, bestehend aus ausgestrichener Gießlösung und Surrogat-Lösungen, wurde von einer Seite der Glasplatte aus in weniger als 20 Sekunden vollständig in das Wasserbad getaucht und für 30 Minuten geschüttelt. Das Wasser wurde nach diesen 30 min ausgetauscht und die Glasplatte mit der inzwischen ausgefallenen Membran erneut für 30 min geschüttelt, wobei sich die Schutzlösungsschichten auflösten und nur die Membran auf der Glasplatte verblieb. Danach wurde die Membran von der Glasplatte gehoben und auf einer Vliesunterlage bei 22 °C getrocknet. An der trockenen Membran wurden die Charakterisierungen durchgeführt.

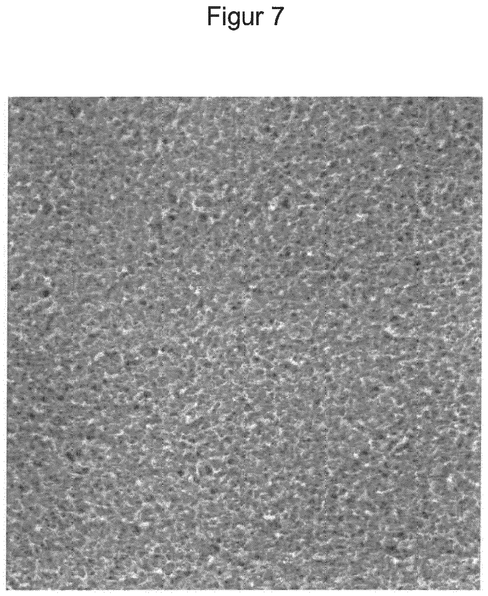

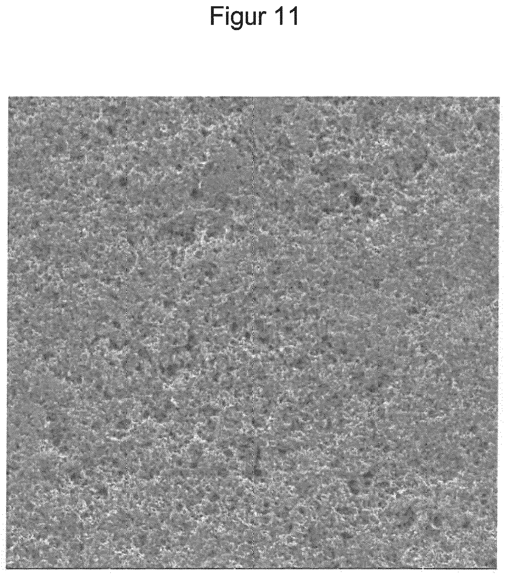

Das Ergebnis ist in Figuren 7 und 11 gezeigt. Die in Figuren 7 und 11 dargestellten REM-Aufnahmen wurden unter folgenden Bedingungen erhalten: Aufnahmegerät: FEI Quants 200 F; Beschleunigungsspannung: 19 kV; Vergrößerung: 4000-fach.

Vergleichsbeispiel 3

Die Zusammensetzung der in diesem Beispiel verwendeten Gießlösung ist in Tabelle 8 angegeben.

Tabelle 8: Gießlösung

| Bestandteile | Massenanteil [%] |
|---|---|
| Polyethersulfon vom Typ "Ultrason E6020" der Firma BASF | 12,00 |
| 2-Pyrrolidon | 77,00 |
| PVP-VA-Copolymer vom Typ "PVP S630" der Firma Ashland | 3,00 |

(fortgesetzt)

| Bestandteile | Massenanteil [%] |
|---|---|
| Glycerin | 5,00 |
| Wasser | 3,00 |

Membranherstellung

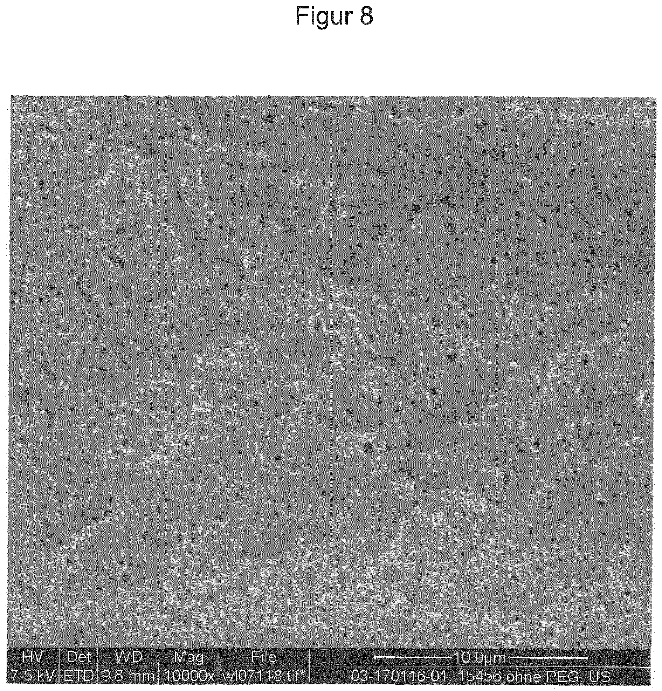

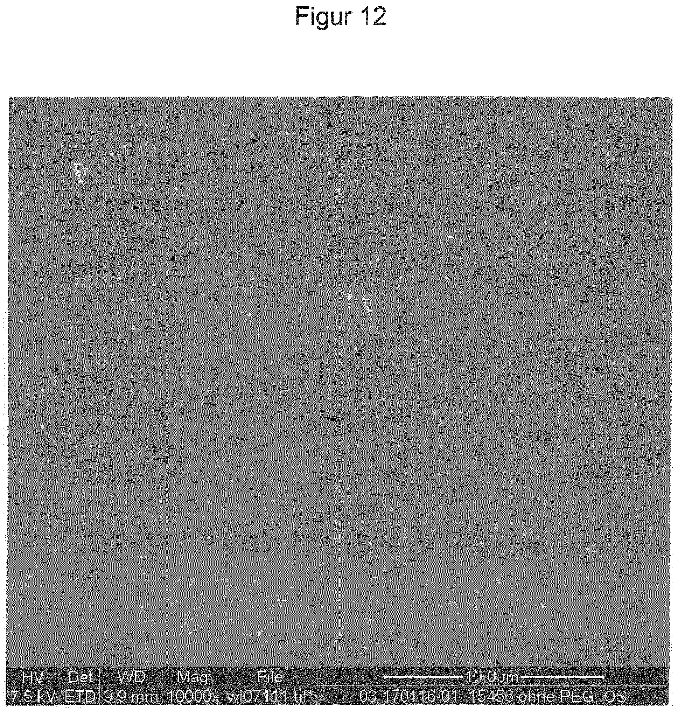

Auf eine Glasplatte wurde die Gießlösung mit einem Rakel mit einer Dicke von 250 µm gleichmäßig aufgebracht und für 3 Minuten der Luftatmosphäre ausgesetzt. Es wurde ein Wasserbad mit 22 °C aufgestellt, das die Glasplatte vollständig bedecken konnte. Die ausgestrichene Gießlösung auf der Glasplatte wurde von einer Seite der Glasplatte aus in weniger als 20 Sekunden vollständig in das Wasserbad getaucht und für 30 Minuten geschüttelt. Das Wasser wurde nach diesen 30 Minuten ausgetauscht und die Glasplatte mit der inzwischen ausgefallenen Membran erneut für 30 min geschüttelt. Danach wurde die Membran von der Glasplatte gehoben und auf einer Vliesunterlage bei 22 °C getrocknet. An der trockenen Membran wurden die Charakterisierungen durchgeführt.
Das Ergebnis ist in Figur 8 und Figur 12 und in Tabelle 9 gezeigt.

Tabelle 9: Vergleich von Beispiel 2 mit Vergleichsbeispiel 3

| | Beispiel 2 | Vergleichsbeispiel 3 |
|---|---|---|
| Oberflächenporosität (Luftseite) | 40% | 0% |
| Oberflächenporosität (Band- bzw. Trägerseite) | 63% | 22% |

Beispiel 3

Die Zusammensetzungen der in diesem Beispiel verwendeten Gießlösung und Schutzlösung sind in Tabellen 10 und 11 angegeben.

Tabelle 10: Zusammensetzung der Gießlösung

| Bestandteile | Massenanteil [%] |
|---|---|
| | |
| Polyethersulfon vom Typ "Ultrason E6020" der Firma BASF | 12,00 |
| 2-Pyrrolidon | 77,00 |
| PVP-VA-Copolymer vom Typ "PVP S630" der Firma Ashland | 3,00 |
| Glycerin | 5,00 |
| Wasser | 3,00 |

Tabelle 11: Zusammensetzung der Schutzlösung

| Bestandteile | Massenanteil [%] |
|---|---|
| 2-Pyrrolidon | 100 |

Membranherstellung

Auf eine Glasplatte wurde eine Gießlösung mit einem Rakel mit einer Dicke von 250 µm gleichmäßig aufgebracht und direkt im Anschluss mit der Schutzlösung in einer Dicke von 50 µm mittels eines Rakels überschichtet. Es wurde ein Wasserbad mit 22 °C aufgestellt, das die Glasplatte vollständig bedecken konnte. Die Glasplatte mit der ausgestrichenen Gießlösung und Schutzlösung wurde von einer Seite der Glasplatte aus in weniger als 20 Sekunden vollständig in das Wasserbad getaucht und für 30 Minuten geschüttelt. Das Wasser wurde nach diesen 30 Minuten ausgetauscht und die Glasplatte mit der inzwischen ausgefallenen Membran erneut für 30 min geschüttelt. Nach vollständiger Entfernung der Überschichtung/Schutzlösungsschicht wurde die Membran von der Glasplatte gehoben und auf einer Vliesunterlage bei 22 °C getrocknet. An der trockenen Membran wurden die Charakterisierungen durchgeführt.

Die Ergebnisse sind in Figur 9 sowie in Tabellen 13 und 14 gezeigt.

Vergleichsbeispiel 4

Die Zusammensetzung der in diesem Beispiel verwendeten Gießlösung ist in Tabelle 12 angegeben.

Tabelle 12 Zusammensetzung der Gießlösung

| Bestandteile | Massenanteil [%] |
|---|---|
| Polyethersulfon vom Typ "Ultrason E6020" der Firma BASF | 12,00 |
| 2-Pyrrolidon | 77,00 |
| PVP-VA-Copolymer vom Typ "PVP S630" der Firma Ashland | 3,00 |
| Glycerin | 5,00 |
| Wasser | 3,00 |

Membranherstellung

Auf eine Glasplatte wurde eine Gießlösung mit einem Rakel mit einer Dicke von 250 μm gleichmäßig aufgebracht. Es wurde ein Wasserbad mit 22 °C aufgestellt, das die Glasplatte vollständig bedecken konnte. Die ausgestrichene Gießlösung auf der Glasplatte wurde von einer Seite der Glasplatte aus in weniger als 20 Sekunden vollständig in das Wasserbad getaucht und für 30 Minuten geschüttelt. Das Wasser wurde nach diesen 30 Minuten ausgetauscht und die Glasplatte mit der inzwischen ausgefallenen Membran erneut für 30 Minuten geschüttelt. Danach wurde die Membran von der Glasplatte gehoben und auf einer Vliesunterlage bei 22 °C getrocknet. An der trockenen Membran wurden die Charakterisierungen durchgeführt.

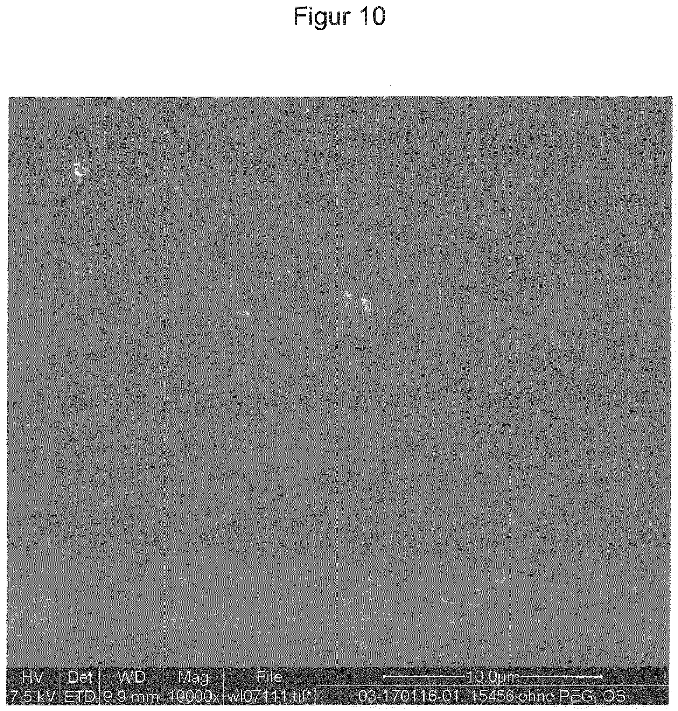

Die Ergebnisse sind in Figur 10 sowie in Tabellen 13 und 14 gezeigt.

Tabelle 13

| | Beispiel 3 | Vergleichsbeispiel 4 |
|---|---|---|
| Oberflächenporosität (Luftseite) | 42% | 0% |
| Oberflächenporosität (Bandseite) | 21% | 20% |

Tabelle 14

| | Beispiel 3 | Vergleichsbeispiel 4 |
|---|---|---|
| Permeabilität [mL/(min·cm$^2$·bar)] | 9 ± 3 | < 1 |

Wie aus Tabelle 13 ersichtlich, weist Beispiel 3, vor allem bedingt durch die höhere Oberflächenporosität der Luftseite, eine deutlich höhere Permeabilität, und somit eine höhere Durchflussleistung, als Vergleichsbeispiel 4 auf.

Zur Bestimmung der Permeabilität der hergestellten Membranen wurden diese in NaCl-Lösung (0,9 Gew.-%) benetzt und anschließend in eine Permeabilitätsmesszelle überführt. Diese bestand aus acht identischen Metallzylindern (Stahldrucktopf, 200 mL Fassungsvermögen, Sartorius Stedim Biotech GmbH). Die Messzellen konnten mit einem definierten Volumen an Salzlösung befüllt werden. Anschließend wurde ein Druck von 0.1 bis 1 bar (je nach Permeabilität) angelegt und das Bodenventil geöffnet. Das Permeat wurde aufgefangen und zeitaufgelöst gewogen. Die Berechnung der spezifischen Permeabilität ergibt sich wie folgt:

$$\chi_{spez} = \frac{V_p}{t \cdot A_a \cdot p}$$

Dabei ist $V_p$ das Permeatvolumen, $t$ die Zeit, die benötigt wird, um dieses Permeatvolumen $V_p$ aufzufangen, $A_a$ die Membrananströmfläche und $p$ der angelegte Druck.

Durch das erfindungsgemäße Verfahren können einlagige poröse Polymermembranen mit hoher Oberflächen- und Gesamtporosität bereitgestellt werden, wodurch dünne Membranen mit hoher Filtrationsleistung erhalten werden können. Durch das erfindungsgemäße Verfahren wird eine neuartige Kontrollmöglichkeit zur Beeinflussung der Phaseninversion bei der Membranbildung aus einer Gießlösung erschlossen, wodurch das Verfahren weniger empfindlich gegen Schwankungen von Parametern wie Druck, Temperatur und Fällmittelkonzentration während der Phaseninversion ist.

**Patentansprüche**

1. Verfahren zur Herstellung einer porösen einlagigen Polymermembran, welches die folgenden Schritte umfasst:

(A) Bereitstellen einer membranbildenden Gießlösung, welche ein membranbildendes Polymer und ein Lösungsmittel dafür umfasst;
(B) Bereitstellen einer nicht membranbildenden und nicht fällenden Schutzlösung;
(C) Bereitstellen eines Trägers;
(D) Aufbringen von zumindest der Gießlösung und der Schutzlösung auf den Träger unter Bildung eines Films, umfassend eine Gießlösungsschicht und eine daran angrenzende Schutzlösungsschicht;
(E) Inkontaktbringen des Films mit einem Fällmittel; und
(F) Entfernen der Schutzlösungsschicht,
wobei in Schritt (D) der Film dadurch gebildet wird, dass

die Gießlösung auf den Träger aufgebracht wird, wodurch sich die Gießlösungsschicht bildet, und die Schutzlösung auf die Gießlösungsschicht aufgebracht wird, wodurch sich die Schutzlösungsschicht bildet oder
die Schutzlösung auf den Träger aufgebracht wird, wodurch sich die Schutzlösungsschicht bildet, und die Gießlösung auf die Schutzlösungsschicht aufgebracht wird, wodurch sich die Gießlösungsschicht bildet und anschließend eine weitere Schutzlösung auf die Gießlösungsschicht aufgebracht wird, wodurch sich eine weitere Schutzlösungsschicht ausbildet,

und
wobei die Schutzlösung 2-Pyrrolidon umfasst oder ein nicht zur Membranbildung fähiges Polymer (Surrogatpolymer), ausgewählt aus der Gruppe, bestehend aus Polyvinylpyrrolidon, Polyethylenglykol, Polysacchariden und/oder Polyvinylalkohol, und ein Lösungsmittel dafür umfasst.

2. Verfahren nach Anspruch 1,
wobei die Schutzlösung das nicht zur Membranbildung fähige Polymer (Surrogatpolymer) und das Lösungsmittel dafür umfasst.

3. Verfahren nach Anspruch 1 oder 2,
wobei die Schutzlösung kein Fällmittel für das membranbildende Polymer enthält.

**Claims**

1. Method for producing a porous monolayer polymer membrane, which comprises the following steps:

(A) providing a membrane-forming casting solution which comprises a membrane-forming polymer and a solvent therefor;
(B) providing a non-membrane-forming and nonprecipitating protective solution;
(C) providing a support;
(D) applying at least the casting solution and the protective solution to the support to form a film comprising a casting solution layer and a protective solution layer bordering thereon;
(E) contacting the film with a precipitant; and
(F) removing the protective solution layer,
wherein in step (D) the film is formed by

applying the casting solution to the support to form the casting solution layer, and applying the protective solution to the casting solution layer to form the protective solution layer,
or
applying the protective solution to the support to form the protective solution layer, and applying the casting

17

solution to the protective solution layer to form the casting solution layer, and subsequently applying a further protective solution to the casting solution layer to form a further protective solution layer,

and

wherein the protective solution comprises 2-pyrrolidone or a polymer not capable of forming a membrane (surrogate polymer), selected from the group consisting of polyvinylpyrrolidone, polyethylene glycol, polysaccharides and/or polyvinyl alcohol, and a solvent therefor.

2. Method according to claim 1,
wherein the protective solution comprises the polymer not capable of forming a membrane (surrogate polymer) and the solvent therefor.

3. Method according to claim 1 or 2,
wherein the protective solution contains no precipitant for the membrane-forming polymer.

**Revendications**

1. Procédé de fabrication d'une membrane polymère monocouche poreuse, qui comprend les étapes suivantes de :

(A) mise à disposition d'une solution de coulée formant une membrane, qui comprend un polymère formant une membrane et un solvant pour cela ;
(B) mise à disposition d'une solution de protection ne formant pas de membrane et ne se précipitant pas ;
(C) mise à disposition d'un support ;
(D) application d'au moins la solution de coulée et de la solution de protection sur le support en formant un film, comprenant une couche de solution de coulée et une couche de solution de protection adjacente à la première ;
(E) mise en contact du film avec un agent précipitant ; et
(F) élimination de la couche de solution de protection, dans lequel, à l'étape (D), le film est formé par le fait que la solution de coulée est appliquée sur le support, moyennant quoi la couche de solution de coulée se forme, et la solution de protection est appliquée sur la couche de solution de coulée, moyennant quoi la couche de solution de protection se forme
ou
la solution de protection est appliquée sur le support, moyennant quoi la couche de solution de protection se forme, et la solution de coulée est appliquée sur la couche de solution de protection, moyennant quoi la couche de solution de coulée se forme et une autre solution de protection est par la suite appliquée sur la couche de solution de coulée, moyennant quoi une autre couche de solution de protection se forme,
et
dans lequel la solution de protection comprend de la 2-pyrrolidone ou un polymère non apte à former une membrane (polymère suranné), choisi dans le groupe constitué de la polyvinylpyrrolidone, du polyéthylène glycol, des polysaccharides et/ou de l'alcool polyvinylique, et d'un solvant pour cela.

2. Procédé selon la revendication 1,
dans lequel la solution de protection comprend le polymère non apte à former une membrane (polymère suranné) et le solvant pour cela.

3. Procédé selon la revendication 1 ou 2,
dans lequel la solution de protection ne contient pas d'agent précipitant pour le polymère formant une membrane.

# Figur 1

| Mag | File | HFW | WD | 10.0μm |
| 10000x | Lis_6257.tif* | 30.08 μm | 11.1 mm | K90, Hand.16, LS |

# Figur 2

| Mag | File | HFW | WD | ————100.0µm———— |
| 1000x | Lis_6258.tif* | 0.30 mm | 11.1 mm | K90, Hand.16, BS |

# Figur 3

| Mag | File | HFW | WD | 10.0μm |
|---|---|---|---|---|
| 10000x Lis_6243.tif* | 30.08 μm | 11.2 mm | | 15550, Ref. Hand.16, LS |

# Figur 4

Mag | File | HFW | WD | 100.0μm
1000x | Lis_6244.tif* | 0.30 mm | 11.2 mm | 15550, Ref. Hand.16, BS

# Figur 5

Figur 6

| Mag | HFW | Det | WD | File | HV | Spot | ——10.0µm—— |
|---|---|---|---|---|---|---|---|
| 6000x | 50.13 µm | ETD | 10.0 mm | SA Sample4_003.tif* | 5.0 kV | 4.0 | H43          L S |

Figur 7

# Figur 8

| HV | Det | WD | Mag | File | 10.0µm |
|---|---|---|---|---|---|
| 7.5 kV | ETD | 9.8 mm | 10000x | wl07118.tif* | 03-170116-01, 15456 ohne PEG, US |

# Figur 9

# Figur 10

| HV | Det | WD | Mag | File | 10.0µm |
|----|-----|-----|------|------|--------|
| 7.5 kV | ETD | 9.9 mm | 10000x | wl07111.tif* | 03-170116-01, 15456 ohne PEG, OS |

Figur 11

# Figur 12

| HV | Det | WD | Mag | File | 10.0μm |
|---|---|---|---|---|---|
| 7.5 kV | ETD | 9.9 mm | 10000x | wl07111.tif* | 03-170116-01, 15456 ohne PEG, OS |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0013768 A1
- JP 2011101837 A
- DE 10326741 A1
- EP 2134455 B1
- EP 1509314 B1

- US 20150258499 A1
- EP 1307280 B1
- EP 2604329 A1
- EP 0689863 B1

**In der Beschreibung aufgeführte Nicht-Patentliteratur**

- **SHANG-TIAN YANG**. *Bioprocessing for Value-Added Products from Renewable Resources*, 2007
- **SIEHE SHRESTHA, AABHASH**. Characterization of porous membranes via porometry. *Mechanical Engineering Graduate Theses & Dissertations*, 2012, 38
- **SIEHE R. DÁVILA**. *Characterization of Ultra and Nanofiltration commercial Filters by Liquid-Liquid Displacement Porosimetry*, 2013
- **SIEHE C. LOH**. Effects of Additives and Coagulant Temperature on Fabrication of High Performance PVDF/Pluronic F127 Blend Hollow Fiber Membranes via Nonsolvent Induced Phase Separation. *Chinese Journal of Chemical Engineering*, 2012, vol. 20 (1), 71-79

- **F. ALTENA**. Phase separation phenomena in cellulose acetate solutions in relation to asymmetric membrane formation. *Dissertation*, 1982
- **A. DERATANI et al.** Retainment of pore connectivity in membranes prepared with vapor-induced phase separation. *Journal of Membrane Science*, 2010, vol. 362, 360-373
- **NOBUYUKI OTSU**. A threshold selection method from gray-level histograms. *IEEE Trans. Sys., Man., Cyber.*, 1979, vol. 9 (1), 62-66